(19) Europäisches Patentamt
European Patent Office
Office européen des brevets

(11) **EP 4 727 078 A1**

(12) **EUROPEAN PATENT APPLICATION**

(43) Date of publication:
**15.04.2026 Bulletin 2026/16**

(21) Application number: **25207112.1**

(22) Date of filing: **07.10.2025**

(51) International Patent Classification (IPC):
**H04L 41/0631** (2022.01)   **H04L 41/069** (2022.01)
**H04L 41/142** (2022.01)   **H04L 43/08** (2022.01)
**H04L 41/122** (2022.01)

(52) Cooperative Patent Classification (CPC):
**H04L 41/142; H04L 41/065; H04L 41/069;
H04L 43/08;** H04L 41/122

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.10.2024   US 202463705626 P
25.04.2025   US 202519190406**

(71) Applicant: **Arista Networks, Inc.
Santa Clara, CA 95054 (US)**

(72) Inventors:
• **Lam, Peter
  Anmore (CA)**
• **Emmons, Thomas Benjamin
  Sunnyvale, California (US)**
• **Capper, Simon Francis
  San Jose, California (US)**

(74) Representative: **Hoffmann Eitle
Patent- und Rechtsanwälte PartmbB
Arabellastraße 30
81925 München (DE)**

(54) **OBSERVING RANKS IN DISTRIBUTED COLLECTIVE COMMUNICATION ENVIRONMENTS, INCLUDING THE DETECTION OF SLOW OR FAILED RANKS**

(57)   Systems and methods for monitoring a distributed collective communication environment during execution of that collective communication environment to facilitate the determination of problems or errors are disclosed. Embodiments may correlate collective data received from ranks in a communication collective and determine a slow or failed rank based on such correlated collective data.

FIG. 1

**Description**

<u>RELATED APPLICATION</u>

This application claims a benefit of priority under 35 U.S.C. § 119 to U.S. Provisional Patent Application Number 63/705,626 filed on October 10, 2024, entitled "Observing Ranks In Distributed Collective Communication Environment, Including The Detection Of Slow Or Failed Rank," the entire contents of which are incorporated herein by reference in their entirety for all purposes.

<u>BACKGROUND</u>

Because of the increasing demand on computing resources placed by current computing applications, and the amount of data utilized in such applications, such computing applications are increasingly implemented in distributed computing systems. These distributed computing systems comprise one or more software components that execute on multiple computing devices or processors connected over a network. Consequently, these distributed computing systems may involve the transfer (e.g., communication) of large amounts of data between these computing systems over the network.

Modern implementations of artificial intelligence (AI), and the associated training of machine learning models used to implement these AI systems, are a specific example of these trends. Specifically, most training of machine learning models is accomplished using distributed computing systems comprising multiple computing devices, where each of those computing devices may comprise one or more processors (e.g., GPUs, CPUs, another type of hardware accelerator, etc.) utilized in parallel.

Data may be communicated between the processes executing on the processors (e.g., GPUs) according to a peer-to-peer communication topology where processes send data directly to other processes, or using a collective communication topology whereby processes executing on different processors may be grouped into a collective, such that the processes of that collective can perform and synchronize certain operations involved in the training of the model (e.g., scatter, gather, all-reduce, broadcast).

For a variety of reasons, it may be desirable to observe performance related characteristics in conjunction with the execution of these types of applications on distributed computing systems. As but one example, for users executing applications on the distributed computing system, it is important to be able to ascertain if their application or network is performant, and if not, where the impediments to such performance are arising.

Most previous attempts to observe (or otherwise determine) such performance data rely on examining historical data on individual machines or processes (e.g., comprising the collective). As such, these solutions cannot be utilized in real-time, or proactively, to monitor for, or determine, performance degradation or problems as a collective is processing a task.

It is therefore desired, to monitor a distributed collective communication environment during execution of that collective communication environment to facilitate the determination of problems or errors, and to provide more detailed and thorough analysis of operations of a collective in such an environment to provide more detailed data on such operations.

<u>BRIEF DESCRIPTION OF THE DRAWINGS</u>

The drawings accompanying and forming part of this specification are included to depict certain aspects of the disclosure. It should be noted that the features illustrated in the drawings are not necessarily drawn to scale. A more complete understanding of the disclosure and the advantages thereof may be acquired by referring to the following description, taken in conjunction with the accompanying drawings in which like reference numbers indicate like features.

FIGURE 1 is a block diagram depicting a network including one embodiment of a network monitoring system adapted to detecting slow or failed ranks.

FIGURE 2 is a block diagram of an embodiment of a device associated with a rank in a communication collective.

FIGURE 3 is a block diagram of an embodiment of a network monitoring system.

FIGURE 4 is a block diagram depicting one example of state data that may be included in collective data determined in association with a rank and utilized to detect slow or failed ranks according to an embodiment.

FIGURE 5 is a block diagram depicting an example of event updates per processing step that may be included in collective data determined in association with a rank and utilized to detect slow or failed ranks according to an embodiment.

FIGURE 6 is a block diagram depicting an example of time spent per processing state that may be included in collective data determined in association with a rank and utilized to detect slow or failed ranks according to an embodiment.

FIGURE 7 is a block diagram depicting an example of speed of network interface data that may be included in collective data determined in association with a rank and utilized to detect slow or failed ranks according to an embodiment.

FIGURES 8 and 9 depict the calculation of throughput according to embodiments.

FIGURES 10A and 10B depict examples of determining startup latency in different collective topologies.

FIGURES 10C and 10D depict examples of determining startup skew in different collective topologies.

FIGURE 11 is a diagram depicting an example of idle time data that may be included in collective data determined in association with a rank and utilized to detect slow or failed ranks according to an embodiment.

FIGURE 12 includes examples of data interpretations that may be utilized to detect slow or failed ranks according to an embodiment.

FIGURES 13A, 13B and 13C depict examples of unaccounted for idle time due to acknowledgement delay.

FIGURE 14 depicts an example of unaccounted for idle time due to polling for completion.

## DETAILED DESCRIPTION

The disclosure and various features and advantageous details thereof are explained more fully with reference to the exemplary, and therefore non-limiting, embodiments illustrated in the accompanying drawings and detailed in the following description. It should be understood, however, that the detailed description and specific examples, while indicating the preferred embodiments, are given by way of illustration only and not by way of limitation. Descriptions of known programming techniques, computer software, hardware, operating platforms and protocols may be omitted so as not to unnecessarily obscure the disclosure in detail. Various substitutions, modifications, additions and/or rearrangements within the spirit and/or scope of the underlying inventive concept will become apparent to those skilled in the art from this disclosure.

Before discussing embodiments in more detail some additional context may prove useful. As discussed, computing applications are increasingly implemented in distributed computing systems. This distributed approach is utilized due to a variety of reasons, including the increasing demand on computing resources placed by current computing applications, and the amount of data utilized in such applications. These distributed computing systems comprise one or more software components that execute on multiple computing devices or processors connected over a network. Consequently, these distributed computing systems may involve the transfer (e.g., communication) of large amounts of data between these computing systems over the network. Thus, commensurate with the increased use of these distributed computing systems, specialized architectures and implementations (e.g., protocols) for the transfer of data have also been developed.

The implementation of modern artificial intelligence (AI) and the associated training of machine learning models used to implement these AI systems is a microcosm of these general trends. In particular, as the size of machine learning models (e.g., the number of parameters of such models), and associated datasets involved in training those machine learning models, increases it is almost completely impractical for such models to be trained on a single computing device. Thus, almost all training of machine learning models utilized for these AI systems is currently accomplished using distributed computing systems and involves the communication of large amounts of data between the computing devices in these distributed computing systems.

To illustrate in more detail, historically as the size of the machine learning models and datasets increased, the use of Graphics Processing Units (GPUs) became the de facto standard for training these models for a number of reasons, including for example, the use of multiple cores that may be efficient in performing certain types of operations in these GPUs. However, as the sizes of models and datasets became ever greater, the use of a single GPU to train these models became untenable. The training of a sufficiently large machine learning model on modern datasets may take tens, or hundreds, of days on a single GPU, and such models and datasets are only expected to grow in size. Accordingly, only by training these machine learning models on multiple GPUs using some form of parallelization may sufficiently improve performance in that training be achieved.

Thus, most training of machine learning models is accomplished using distributed computing systems comprising multiple computing devices, where each of those computing devices may comprise one or more GPUs or other types of processors (e.g., CPUs or other hardware accelerators) utilized in parallel. It will be noted, here, that while certain embodiments will be discussed herein with respect to GPU's these embodiments and others contemplated herein may be utilized and apply to computing devices using these other types of processors or hardware.

Data may be communicated between the processes executing on the GPUs according to a peer-to-peer communication topology where processes send data directly to other processes, or using a collective communication topology whereby processes executing on different GPUs may be grouped into a collective, such that the processes of that collective can perform and synchronize certain operations involved in the training of the model (e.g., scatter, gather, all-reduce, broadcast). The processes in such a collective may communicate with one another according to a communication topology such as a ring, tree, or all-to-all communication topology.

Certain libraries may provide functionality to transfer data as discussed such as, for example, the NVIDIA Collective Communication Library (NCCL) (e.g., version 2.19.3). In the context of collective-based distributed computing, a "rank" is an identifier that refers to the position or identifier assigned to a process or node within a distributed system. Each process or node is often given a unique rank number, which helps in organizing communication, coordination, and data distribution among multiple processes. For example, in MPI (Message Passing Interface), a common framework for parallel computing, each process in a communicator is assigned a rank, allowing processes to send and receive messages to and from specific ranks. This rank is crucial for operations that involve collective communication patterns, such as broadcasts, reductions, and gatherings, as it helps define how data is shared and processed across the system.

For a variety of reasons, it may be desirable to observe characteristics of the performance in conjunction with the execution of these types of applications on distributed computing systems. For users executing applications on the distributed computing system, it is important to be able to ascertain if their application or network is performant, and if not, where the impediments to such performance are arising. The performance of these applications is important in these scenarios at least because computing devices in these distributed computing environments may be quite expensive.

Because of this expense, distributed computing systems are often implemented or maintained by third parties. Users who wish to execute such applications (e.g., machine learning model training) may buy time on these third party distributed computing systems and deploy their applications on the third party's distributed computing system accordingly. Thus, the performance of applications and these distributed computing systems is important to users so they can minimize the time required on these third party distributed computing systems, while the performance of the application on the distributed computing system is important to network administrators of these third party distributed systems so that their services may be efficiently provided to disparate users, or such that more users may utilize their platform at any given time.

Tracking the performance of the applications or networks (e.g., data transfers) in these distributed computing systems is, however, difficult. In particular, in a distributed collective communication environment, it is difficult to determine if a performance bottleneck is due to network performance, or host/GPU performance. This difficulty is due in no small part to the architecture and topology of such distributed collective communication environments. Typically, to attempt to solve these issues, most existing technologies involve examining backtraces and or states local on every device participating in a distributed collective communication environment. Thus, this debugging requires examining historical logs on individual machines looking for signs that indicate the cause of the performance degradation. As can be realized, this examination necessarily occurs after the occurrence of a problem and cannot be accomplished in real-time to monitor the performance of a collective or application as it is executing.

In contrast, embodiments as disclosed may serve to isolate, or determine a cause for, slow or failed ranks in a distributed collective communication environment by analyzing data in the distributed collective communication environment that ties the (e.g., many) processes involved in a collective (e.g., job) together. In particular, embodiments may be adapted to accomplish such monitoring (and any associated reporting), including the determination of problems or errors, substantially in real-time as an application or collective is processing. This capability may serve to significantly reduce the time and associated cost involved in determining and remediating such problems.

Embodiments may thus utilize, or be incorporated into or with, communication directives or protocols used for communication in a distributed collective communication environment to obtain or export this (e.g., state) data from the device (e.g., to a central location for monitoring or analysis such as at a network monitoring system). Specifically, such data may be exported off devices in a distributed communication collective (e.g., at intervals, upon the occurrence of an event, upon request, etc.). This data may include the state of the processes (e.g., applications) communicating in a distributed collective communication environment. This state can thus be tied to the (operation of) the network through which the processes may communicate (e.g., by using data on the network using data from network infrastructure devices or otherwise obtained or determined at a network monitoring system).

For example, this data or state may be exported utilizing, or interfacing with, (e.g., collective communication) libraries (e.g., NCCL) used by the processes in these collectives to communicate. By obtaining data in this manner, the state may be obtained by exporting the data out of these libraries (e.g., NCCL) at a low level, making these embodiments independent of the higher software stack. Thus, embodiments may be independent of any software running on top of these libraries, making these embodiments universally applicable for any applications utilizing these libraries and making deployment of these embodiments relatively simple.

Accordingly, embodiments may be utilized to detect failed or slow ranks in a distributed collective based on communications in that collective using data such as event counts, timestamps, or histograms of time spent in different states within the communication state machines. These statistics may be further combined with network data (e.g., network) topology information to detect slow or failed ranks. For example, embodiments as described may utilize, or can be combined with, network statistics such as queue congestion events, and increased latency to disambiguate slow networks (e.g., from slow or failed ranks in a distributed communication collective).

Specifically, according to embodiments, collective data may be received from each of a set of ranks communicating over a network in a communication collective. These ranks may be executing (instances of or portions of) an application. The collective data can be provided, for example, utilizing a collective communication library employed by each of the set of ranks to communicate over the network in the communication collective. The collective data received from a rank may include data associated with a state of that rank. Moreover, the collective data provided from a rank in the set of ranks may be processed at that rank to account for certain aspects of communication or processing an collective (e.g., to perform correction on collective data gathered at that rank).

This collective data from a (e.g., each) rank can be received, for example, at a network monitoring system or the like. The collective data received from each of the ranks in the communication collective can be correlated (e.g., associated), and a slow or failed rank of the set of ranks of the communication collective determined based on the correlated collective data. In some cases, this collective data may also be correlated with network data associated with operation of the network (e.g., the state of the network as the ranks are executing the application). Thus, the slow or failed rank may be determined dynamically (e.g., in real-time while the set of ranks are executing an application such as a machine learning training application).

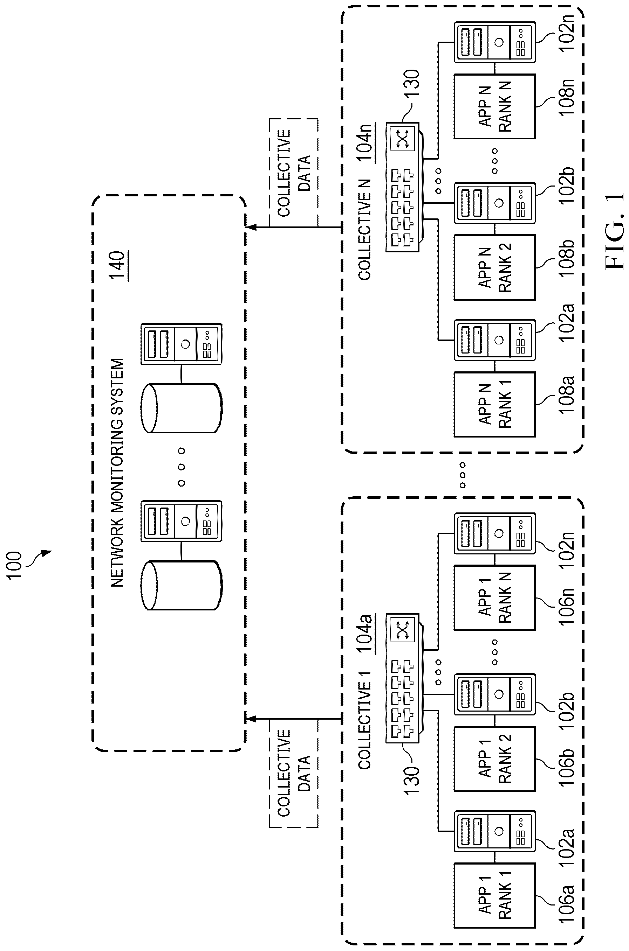

Referring now to FIGURE 1, a network environment including one embodiment of a network monitoring system adapted to detect failed or slow ranks in a distributed collective is depicted. Here, network 100 may include one or more collectives 104. Each collective 104 (e.g., 104a, 104n) may include (e.g., by part of) a respective application 106, 108 adapted to perform a particular task (e.g., train a machine learning model). Specifically, an application 106, 108 of a collective 104 may include instances (106a, 106b, 106n, 108a, 108b, 108n, also referred to as processes or ranks) of that application 106, 108 deployed on distributed devices 102 (102a, 102b, 102n) of that collective 104. These devices 102 may be physical or virtual devices that can, for example, include one or more processors such as GPUs or the like. Each of those instances (106a, 106b, 106n, 108a, 108b, 108n) of an application 106, 108 may be assigned a rank or other identifier that refers to the position or identifier assigned to the instance (106a, 106b, 106n, 108a, 108b, 108n) of the application 106, 108 or device 102 within the collective 104.

Data may thus be communicated over network 100 between the application instances (e.g., 106a, 106b, 106n) of each collective 104 (e.g., 104a) executing on the devices 102 of that collective (e.g., 104a) according to a peer-to-peer communication topology or collective communication topology. The application instances (e.g., 106a, 106b, 106n) executing on different devices 102a, 102b, 102n of the collective (e.g., 104a), communicate such that applications 106, 108 of that collective 104 can perform and synchronize certain operations involved in the performance of a task (e.g., such as operations involved in the training of the model (e.g., scatter, gather, all-reduce, broadcast). The application instances (e.g., 106a, 106b, 106n) in such a collective (e.g., 104a) may communicate with one another according to a communication topology such as a ring, tree, or all-to-all communication topology.

Devices 102a, 102b, 102n, in collective 104 may be adapted to store or export collective data (e.g., state data) associated with the instance (rank) of the application 106 executing thereon. This collective data may include an identifier or other mechanism for associating the collective data with the application 106 on that device 102a, 102b, 102n, the device 102a, 102b, 102n, or the rank of that instance of the application 106, 108. This collective data may include state data related to the instances of application 106, 108 communicating in the distributed collective communication environment 104 such as event counts, timestamps, or time spent in different states.

The collective data can thus be exported from the device 102 to a central location for management or analysis such as network monitoring system 140. Additionally or alternatively, network monitoring system 140 may obtain this collective data from the devices 102a 102b, 102n of a collective 104 (e.g., at regular interval). Specifically, in one embodiment, such collective data may be exported off devices 102 in the distributed communication collective 104 (e.g., at intervals, upon the occurrence of an event, upon request, etc.).

Network monitoring system 140 can thus receive this collective data pertaining to the state of the application 106, 108 in a collective 104 (e.g., particular ranks for the collective 104, store this collective data. Network monitoring system 140 can correlate the collective data from ranks (e.g., instances of the) application 106, 108 such that collective data associated with a collective 104, application 106,108 within a collective, or ranks within that collective 104 (e.g., as received from different ranks of an application 106, 108 on different devices 102), may be associated at the network monitoring system 140 (e.g., despite that collective data being received at different times from different ranks of the application 106, 108 or different devices 102 within that collective 104). This collective data (e.g., including the state of the collective 104, application 106, 108 executing in the collective 104 or individual ranks of the application 106, 108 in the collective 104) can also be correlated with network data associated with the (operation of) the network 100 through which the ranks of application 106, 108 may communicate (e.g., utilizing network data on the network 100 using data from network infrastructure devices such as switches or routers 130, or otherwise obtained or determined at network monitoring system 140).

Network monitoring system 140 may be adapted to analyze collective data associated with a collective 104 to determine and present rank data on the ranks of the collective 104 based on communications in that collective 104. This rank data may include the detection and presentation of failed or slow ranks in the collective 104 based on communications in that collective 104 using (rank) data such as event counts, timestamps, or histograms of time spent in different states within the communication state machines of those applications 106, 108. These statistics may be further combined with network data (e.g., network or collective) topology information to detect slow or failed ranks of applications 106, 108 within a collective 104. For example, embodiments as described may utilize, or can be combined with, network statistics such as queue congestion events, and increased latency to disambiguate slow networks (e.g., from slow or failed ranks in distributed communication collective 104). Data on the collectives 104, applications 106, 108 of a collective 104, or individual ranks within a collective may then be presented to a user by network monitoring system 140.

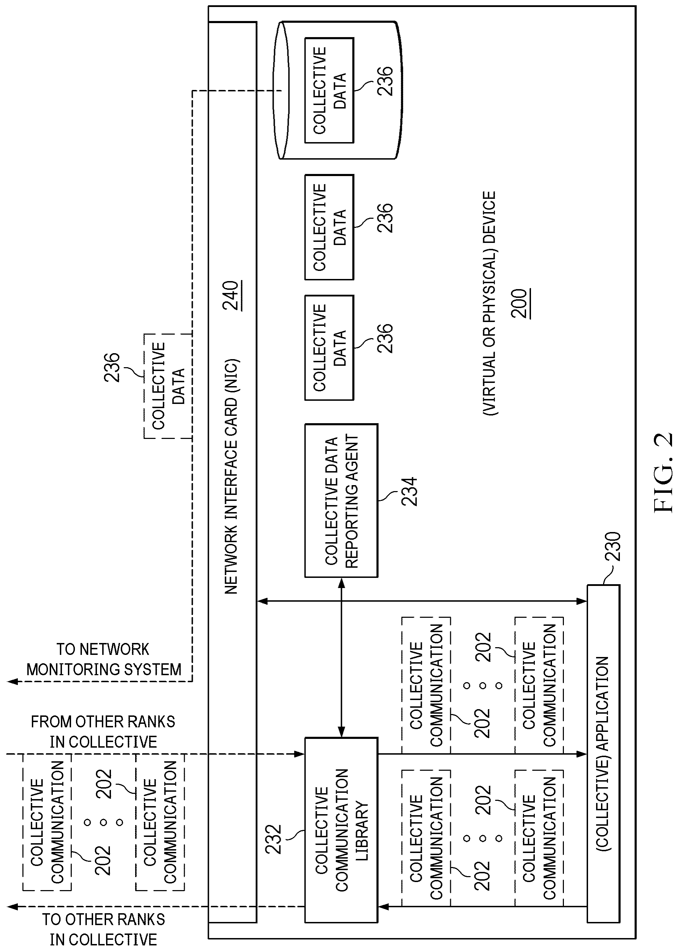

Looking at FIGURE 2, one embodiment of a device 200 that may be adapted to gather and provide collective data regarding an instance (rank) of an application executing thereon. As discussed, device 200 may comprise a virtual or physical computing device. Device 200 may, in one embodiment, comprise (or executing utilizing) a hardware accelerator such as a GPU or the like. Device 200 includes network interface card (NIC) 240 connecting device 200 to computer network. It will be understood here that the term NIC will apply generally to any network elements such as embedded network elements (e.g., included on a chip or ASIC such as a CPU, GPU, etc.) An instance 230 of an application participating in a communication collective for that application may be executing on device 200, where those instances may communicate over the computer network. As understood, this application instance (e.g., process) 230 or device 200 may be assigned a rank within this communication collective. Thus, the ranks of that communication collective can communicate over the network to perform and synchronize certain operations involved in one or more tasks, such as training of a machine learning model (e.g., scatter, gather, all-reduce, broadcast). For example, in MPI, each process of an application (e.g., instance 230) is assigned a rank, allowing processes to send and receive messages to and from specific ranks.

The processes of the application (e.g., instance 230) in the collective may thus communicate over the network with one another according to a communication topology such as a ring, tree, or all-to-all communication topology. A collective communication library 232 may provide functionality to transfer data over the network between application instances in the communication collective according to such a communication topology. Such a communication library can be, for example, the NCCL (e.g., version 2.19.3). Utilizing this collective communication library 232 then, the instance 230 of the application on the device 200 may send collective communications 202 (e.g., regarding operations (or ops) to be performed by instances of that application) to other ranks in the communication collective including instance 230 of the application, and receive collective communications 202 from other ranks in the communication collective including instance 230 of the application. These collective communications 202 are thus sent or received through collective communication library 232 over NIC 240 of device 200.

Collective data reporting agent 234 may be included on device 200 to obtain or generate collective data 236 associated with the operation of instance 230 of the application comprising a rank in the communication collective. In particular, collective data reporting agent 234 may obtain or observe such collective data 236 from instance 230 of application on device 200, the collective communication library 232 through which data is transferred between ranks of the communication collective including instance 230 of the application, or NIC 240 of device 200. For example, in one embodiment, collective data reporting agent 234 may be incorporated into, or with, collective communication library 232.

Collective data reporting agent 234 can thus obtain or determine this collective data 236 and export this collective data 236 data from the device 200 (e.g., to a central location for management or analysis such as at a network monitoring system). Accordingly, this collective data 236 can be exported to a network monitoring system or the like by collective data reporting agent 234 (e.g., at certain intervals, at the occurrence of an event, etc.) or the collective data 236 may be stored by collective data reporting agent 234 and exported (e.g., to a network monitoring system) in response to a retrieval request received at the device 200

This collective data 236 may include a variety data associated with the operation or state of the instances (e.g., instance 230) of the application communicating in the communication collective and may include an identifier of the rank associated with the device 200 or instance 230 of the application, or of the communication collective comprising instance 230 of the application.

In one embodiment, for example, this collective data 236 may include sender or receiver state counts.

Specifically, in a distributed collective computation, each rank (e.g., instance of an application may perform a loop comprising processing data and sending or receiving data from its neighbor(s) in the communication collective (e.g., in accordance with the topology of the collective). Therefore, sender/receiver events in the collective correspond to the processing step of the computation and may be determined and kept at the device 200 and included in collective data 236.

Collective data 236 may include event data on one or more events, or operational parameters, that occur at device 200, instance 230 of the application on device 200, or across the communication collective, including data related to the communication state machine of the instance 230 of the application. This event data may include event counts pertaining to one or more events. For example, these event counts may correspond to a (e.g., particular) processing step of a collective in the communication. This event data may also include timestamps associated with when a rank (e.g., instance 230 of the application) starts or stops a processing step.

In some embodiments, collective data 236 may also include communication data. This communication data may include data (e.g., timestamps) related to a time a rank (e.g., instance 230) spends in one or more communication states. For example, timing data associated with time spent in a state where rank (e.g., instance 230) wanted to act as a transmitter (also referred to as sender) in the communication collective as it has data to transmit, but no other rank (e.g., receiver) has requested data. Such data can include, for example, time spent in a transmit waiting for Clear to Send (CTS) state. This timing data may include, for example, the time the rank (e.g., instance 230) is ready to transmit but cannot due to waiting for CTS. In some cases, this time may be determined to be idle time and may get demarcated as such in collective data 236.

Data related to the operation of NIC 240 may also be determined and included in collective data 236 in certain embodiments. This network interface data may include throughput data pertaining to the NIC 240 or outstanding work requests to NIC 240 (e.g., related to instance 230 of the application). This NIC data on work requests received at NIC 240 may include data such as timing data related to those work requests or the amount of data that needs to be transferred for that work request (or data from which the amount of data to be transferred may be determined).

Additionally, an estimated completion time can be determined for work requests (e.g., based on the amount of data and a link speed) and included in association with collective data 236. In certain cases, start times for a number of last sent communications (e.g., requests) may be kept along with a completion time associated with that communication. The number of communications on which data may be kept may be related to the number of instances 230 of the application 230 in the collective in which instance 230 of the application is participating. For example, a queue, ring, list, etc. or other data structure including data on the last N communications sent by application 230 may be kept for adjustment, where N may be a size (or factor of the size of) the collective of which instance 230 of application is a member.

NIC data may also include a measurement of network idle time reflecting the time the NIC 240 spends idle (e.g., with no outstanding requests). Such NIC 240 may also be maintained on a queue pair (QP) basis. There may be different types of idle time on which collective data 236 may be determined. For example, an active work ratio may be a first type of idle time relating to idleness when an op is active while extra capacity may be a second type of idle time related to idleness when there are no active ops. To express it formulaically, work ratio = raw throughput / idle adjusted throughput = tx_time / ( tx_time + idle_time_while_active_ops). where idle_adjusted_throughput = bytes_tx / tx_time, and raw_throughput = bytes_tx / (tx_time + idle_time_while_active_ops). Moreover, the determination of idle time may include not only an amount of time spent at idle (e.g., with no outstanding requests), but may also track an amount of time that NIC spends at each "level" of requests pending (e.g., time spent with one request pending, time spent with two requests pending, etc.). In this manner, idle time can be maintained for NIC 240 and busy time can be determined based on an aggregate amount of time spent when NIC 240 has at least one request pending.

It will be noted that collective data agent 234 may perform certain manipulations or corrections of such collective data 236 based on determined or observed device 200 or network characteristics (e.g., before such collective data 236 is provided to network monitoring system 300). In particular, as may be realized, the determination of correct start and completion times for the communication of requests may play heavily into the correct determination of idle and busy times (e.g., of a NIC 240) at the device 200. Thus, in some cases, such manipulations or corrections may be intended to correct the start times or completion times of the communication of requests using NIC 240. The determination of accurate start or completion times for these communications (e.g., work requests) may, commensurately, drive the more accurate determination of idle times or busy times by collective data agent 234.

Specifically, the methods by which applications 230 in a collective, library 232 or NIC 240, may operate can serve as impediments to determining accurate start or completion times for communications (e.g., for requests) when determining collective data 235. For example, because of the way that NCCL and Remote Direct Memory Access (RDMA) operate, in certain instances there may be times in which NIC 240 was idle that are difficult to observe, as the NIC 240 may have to wait for an acknowledgement from a receiver of a communication before completion of that communication can be reported (e.g., to application 230 or collective data reporting agent 234). Thus, completion times of the communication of requests may be skewed. As another impediment to determining accurate start or completion times, to determine if NIC 240 has completed a communication, application 230 (or collective reporting agent 234) may have to poll NIC 240. This polling may only occur at certain intervals. Thus, the timing of this polling interval may affect the determination of accurate start or completion times (e.g., a completion of a communication by NIC 240 cannot be determined before such polling is conducted).

Thus, to determine more accurate start or completion times, and thus more accurate determination of idle times and busy times for NIC 240, collective data reporting agent 234 may apply a number of mechanisms. In one embodiment, for example, idle time determinations in collective data 236, collective data agent 234 may observe or determine a network latency or round trip time (RTT) and adjust the completion times of one or more communication requests sent from the NIC 240. These adjusted completion times can be used to more accurately determine idle time (and time spent with one or more pending requests) for application 230 or NIC 240. For example, during initialization of a collective, the transport layer of the collective communication library 232 (e.g., NCCL) may connect QPs within a communication. During this phase, a number (e.g., 10) of (e.g., 0-length) RDMA writes may be sent to profile what a minimum completion time is. A minimum completion or RTT time can be determined and used to adjust completion times. As another embodiment, the polling interval or time of polling a NIC 240 for completion of a communication can be tracked. A completion time associated with a communication can then be adjusted based on a time of a last (e.g., most recent) poll, or closest polling time to the completion time for that communication, etc.

Another technique that may be employed by collective data reporting agent 234 is to check an aggregate time for one or more communications to ensure that an overcorrection of start times or completion times have not taken place. Here, embodiments may compare an overall busy time determined for a set of communications to an absolute minimum time it would take to transmit that data at a determined (e.g., base) bandwidth rate (e.g., RTT) for the network. The determined bandwidth can, for example, be determined by sending sampling packets or the like from collective data reporting agent 234 over the network. If the collective busy time is less than the time determined based on the bandwidth rate for the network an error may be raised or one or more start times or completion times redetermined. For example, to prevent overestimating idle adjusted throughput, after applying corrections, the completion time may be adjusted or (or bumped), if needed, as follows: adjusted_completion_time =max(transmit_size / line_rate, adjusted_completion_time).

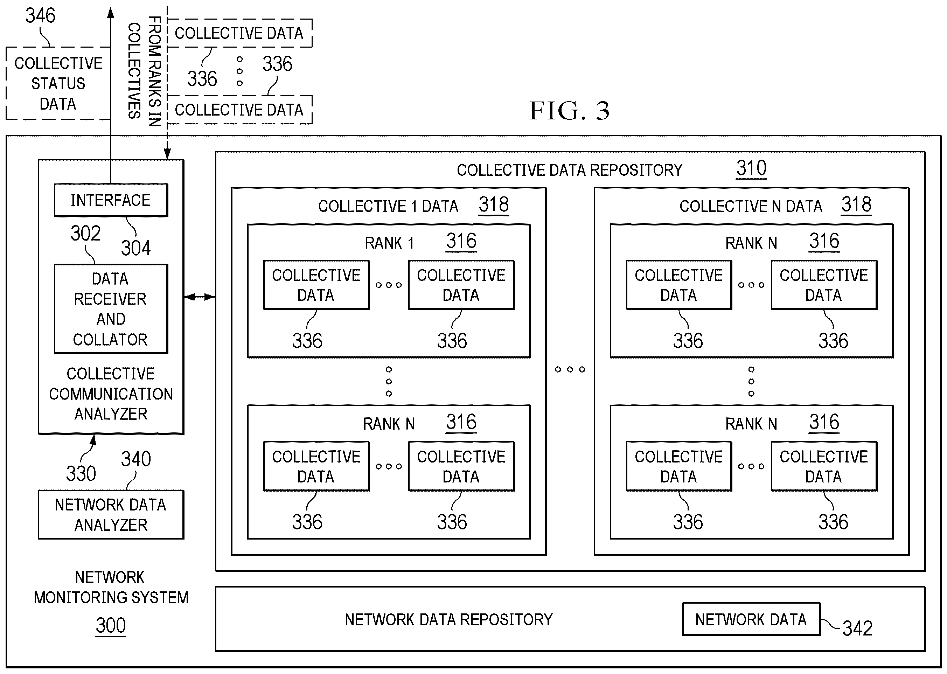

Moving on to FIGURE 3, one embodiment of a network monitoring system 300 that may be adapted to gather or determine collective data regarding communication collectives, and provide data on those communication collectives, including failed or slow ranks in such collectives, is depicted. Here, collective communication analyzer 330 of network monitoring system 300 can receive collective data 336 from ranks in a communication collective (e.g., devices or instances of an application in that communication collective). Specifically, data receiver and collator 302 may receive this collective data 336 and store this collective data 336 in collective data repository 310. Data receiver and collator 302 can correlate and store the collective data 336 received from ranks (e.g., instances of an application) of a communication collective such that received collective data 336 associated with a collective 318 (e.g., which may be received at multiple times) may be associated in collective data repository 310. Moreover, data receiver and collator 302 may correlate and store data received from ranks (e.g., instances of an application) of a communication collective such that received collective data 336 received from particular ranks 316 within a communication collective 318 may also be associated.

Collective communication analyzer 330 of network monitoring system 300 may thus be adapted to determine collective status data by analyzing collective data 336 in collective data repository 310 associated with a collective 318 (or rank 316 of a collective 318) using data such as event counts, timestamps, or histograms of time spent in different states. Such collective data may optionally be combined with, or include, data reflecting a computer topology. This is because often, it is desired to account for the compute topology in analyzing (e.g., making sense of) collective data. For example, the event counts will show a break if topology is accounted for. As another example, wait statistics may be transitive, so it may be desired to account for a compute topology in accounting for wait statistics in the topology to find out which nodes actually introduced the wait. Accordingly, status data may be associated with, or indicate, failed or slow ranks in the collective. Collective communication analyzer 330 can present such collective status data 346 to a user through interface 304 or provide such collective status data 346 in response to a request received at interface 304.

The determined collective status data (e.g., including the state of the collective application or individual ranks in the collective) can also be determined by correlating collective data 336 with network data 342 associated with the (operation of) the network through which the ranks of the communication collective communicate. In particular, as network monitoring system 300 may be adapted to monitor the state of the network in which the communication collective resides, network data analyzer 340 may obtain or determine network data 342 based on data from network devices on the network (e.g., such as switches or routers or other network infrastructure devices). Thus, collective status data may be determined by combining or correlating collective data 336 with network data 342. This network data 342 may include network statistics such as queue congestion events or latency data to, for example, disambiguate slow networks from slow or failed ranks in distributed communication collective.

In one embodiment, when interpreting or analyzing collective status data, data from the same set of data (comm) that is split across QPs may be utilized to determine data such as throughput, completion times, or levels. This is because all QPs within a comm should have the same observed characteristics. If a single QP within a comm has impaired throughput relative to the other QP in the comm, it is likely a QP impairment along a QP path through the network. If the throughput of all QPs are low within a comm, the impairment is likely at a source (e.g., server or port) or destination (e.g., port or server).

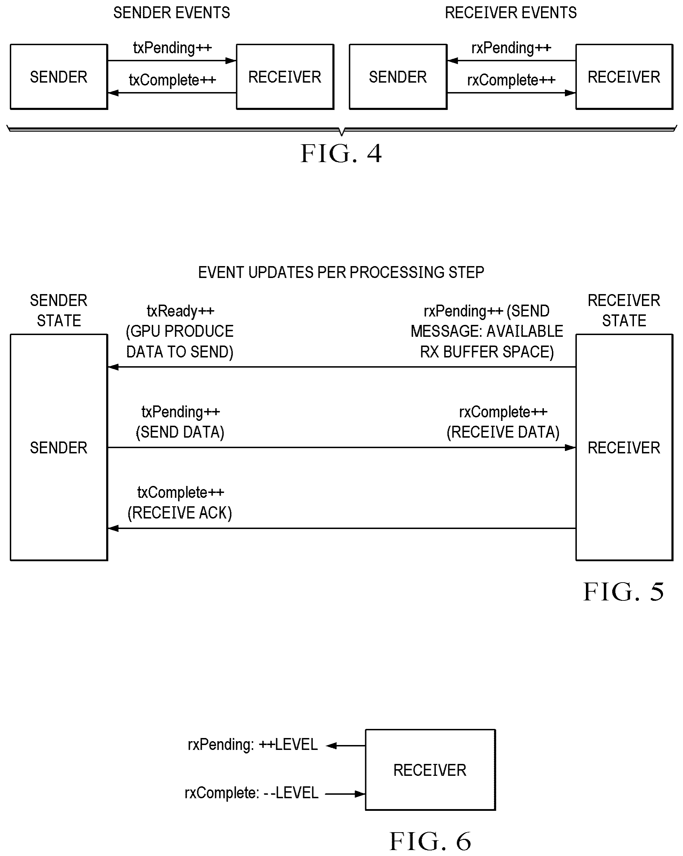

It will now be useful to discuss specific embodiments of the determination of slow or failed ranks for a communication collective. Referring then to FIGURE 4, one embodiment may detect failures using sender or receiver state counts (e.g., associated with one or more ranks of the communication collective). Specifically, a problem with detecting the failure point in distributed collective computation is when a rank fails, the entire collective is stalled. For example, in an all_reduce ring, if a rank fails to produce data for its neighbor, the entire ring will eventually stall. To determine which rank is causing the stall, per-sender or receive event counts may be utilized. If each rank participates in different collective topologies (e.g., Ring, Tree, point to point), each sender/receiver pair maintains its own set of event counts per topology. The sender events are counted on the sender. The receiver counts are counted on the receiver. These event counts may thus correspond to the processing steps of the distributed collective.

For example, the sender event txPending increments (represented by "++") when the sender transmits data to the receiver. The txComplete increments when the sender receives acknowledgment from the receiver that the data has been received. The receiver event rxPending increments when the receiver sends a message to the sender that it is ready to receive data. The receiver increments rxComplete when it has received the data.

Accordingly, during a distributed collective computation, each rank repeats the following loop: 1) process data and 2) send/receive data from its neighbor(s) in accordance to the topology (e.g., of the collective). Therefore, sender/receiver events in the collective correspond to the processing step of the computation. When a rank fails (or is low), it stops (or has stopped) at an earlier step which can be detected by having lower event counts. Thus, a slow or failed rank can be determined as a rank with a lower event count (e.g., relative to other ranks of a communication collective).

Moving to FIGURE 5, an example of event updates per processing step is depicted. For purposes of this example, assume that a receiver initiates the data flow by sending a message to the sender to indicate that the receiver has available buffer space to receive (e.g., data). In these cases, embodiments may determine final event counts for different sized rings, where rank N sends to rank (N+1) modulo the numGPU (e.g., the number of ranks where each rank can be implemented on a GPU), and receives from rank (N-1) modulo numGPU. Here, event counts may be determined, shown or used in association with one or more ranks in different sized rings where these event counts corresponding to a txReady (event), a txPending (event), a txComplete (event), a rxPending event or a rxComplete (event).

Specifically, txReady (e.g., txReady event count) may be incremented on a sender (rank) when data is produced by the rank (e.g., GPU) to send; txPending (e.g., txPending event count) may be incremented on a sender (rank) when the sender actually sends data (e.g., to? the receiver rank); txComplete (e.g., txComplete event count) may be incremented on a sender when the sender receives acknowledgment (e.g., ack from the receiver?) for data sent to the receiver; rxPending (e.g., rxPending event count) may be incremented on a receiver when the receiver notifies a (potential) sender that the receiver has an available buffer to receive data (e.g., such a notification may happen when the collective starts up and subsequently after a rank (e.g., GPU) processes a fully received buffer); and rxComplete (e.g., rxComplete event count) may be incremented on a receiver when data is received from a sender.

Appendix A discloses examples of data for observing such event counts in a collective. Appendix A provides the event counts for collectives using ring topologies consisting of various ranks (e.g., numGpu=2 to numGPU=32). In particular, this data is associated with an example collective where each rank can send two slices initially to start the processing, and can buffer up to four receive slices at a time. Rank 0 may never send any data. Embodiments can thus observe that the initial data works its way to rank 0 and then backs up.

Accordingly, embodiments may utilize one or more event counts corresponding to a processing step of a collective in a distributed collective computing environment where a slow rank will enter/exit a processing step the slowest. If a timestamp is additionally maintained when a rank starts a processing step (e.g., where the timestamps are synchronized across the ranks), the detection of slow ranks may be performed. Thus, slow rank detection may be performed by embodiment using synchronized timestamps.

For example, slow rank detection may be performed using timestamps and causality in a compute graph to recover global ordering. In one embodiment, timebases (e.g., clocks or other time keeping mechanisms) may be synchronized across ranks in a distributed collective computing environment. Timestamps may be used when a rank starts a step of the process. Causality may then be used to recover global ordering (e.g., amongst the ranks). For example, in a ring, step N relies on the data from step N-1. It may also be known that the receiver rxPending event happens before the sender txPending event. This causality can be used to recover global ordering.

To illustrate with an example: assume the following data is obtained where rank0 sends to rank1, where each tuple represents (eventType, step, timestamp): Rank 1: (rxPending, step 1, 60), (rxComplete, step 1, 70), Rank 2: (txPending, step 1, 0), (txComplete, step 1, 20). Due to causality, the ordering must be rxPending > txPending > rxComplete > txComplete. It can therefore be determined that an offset x may be added where (60 < x < 70) to rank 2 timestamps (e.g., obtained for event from a collective).

It will be noted that while some embodiments may make use of (e.g., synchronized) timestamps, other embodiments may not require (e.g., synchronized) timestamps. Such embodiments may, for example, compare one or more periods of time a rank in a collective spends in one or more (e.g., different) communication states. An embodiment may be described in association with the diagram of FIGURE 6. In one embodiment, the rxPending - rxComplete (level) can be tracked by a rank acting as a receiver. Thus, this level is reflective of a difference between a number of pending receives and a number of completed receives. A number of cycles spent at each level can be determined (e.g., measured) (e.g., by the network reporting agent at the rank). Slow ranks will tend to be a low(er) level, because their rx buffers will be full (e.g., as that rank may be slower in processing communications in their rx buffer). Faster ranks sending to slow rank will tend to a high(er) level because they are waiting for available rx buffer space (e.g., they are faster processing and completing communications in their rx buffers). Faster ranks receiving from slow rank will tend to a low(er) level because they are waiting for data to process.

Accordingly, if a particular rank is slow, data will backpressure through multiple nodes, as described above. Thus, in order to determine a slow (or slowest) rank in a collective the topology of the rank may be utilized in conjunction with the rxPending - rxComplete (level) of the ranks in the collective to determine a slow or slowest rank (e.g., based on how data may backpressure in such a collective). In particular, , a network monitoring system may utilize the levels reported by one or more of the ranks within the collective to determine a slow (or the slowest) rank, the topology can be walked (e.g., data associated with collectives in the topology can be analyzed) to find the split between slow and fast rank.

As has been discussed, certain embodiments may utilize rx communication data (e.g., states) to determine slow or failing ranks or make other determinations. Embodiments may also find a slow receiver if we measure the time spent in a state where the transmitter has data to transmit, but the receiver has not requested data.

According to one embodiment, transmit waiting for a CTS may be utilized to detect a slow or failing rank. To illustrate in more detail, in some communication libraries, the receiver requests data from the sender before the sender sends the data. For example, in NCCL, the receiver sends a CTS to the sender. It is possible, however, that the sender is ready to send data to the receiver before a CTS is received. This can happen if the receiver is slow, or if the sender is fast. The time the sender is ready to transmit but cannot due to waiting for CTS would get included into idle time. This tx wait time can be tracked separately because it indicates that although a network interface (e.g., NIC) may be idle, the sender would have been able to utilize the network interface (NIC) if the receiver had sent the CTS earlier.

Embodiments may also use transmit timing to detect slow network transfers in a distributed collective communication environment (e.g., using a histogram of transmit completion times). In distributed collective communications, the amount of data transmitted per step is homogeneous. Data on transmit completion times can be obtained, measured or determined, and, (e.g., histograms of) different ranks, and different channels on the same rank may be compared to find slow outliers.

For example, in one embodiment, a histogram of outstanding work requests to network interfaces (e.g., NICs) may be determined and used to make determination regarding ranks in a distributed collective communication environment. This histogram can comprise, for example, data related to outstanding work requests for each of the ranks for the communication collective.

To illustrate in more detail, in RDMA, software (e.g., the executing application of a rank) enqueues work requests (WRs) to the network interface (e.g., NIC). After processing the WRs, the network interface (NIC) will return a completion. Thus, the number of outstanding work requests to the network interface can be obtained. The amount of time spent, the average time between transitions, or other data (e.g., statistics) on the number of outstanding work requests can be determined or tracked. During normal well-behaving collectives, a steady number of outstanding requests may be expected. If the network slows down, the number of outstanding requests will increase. If the host slows down, more time may be spent with no requests outstanding.

Of particular interest may be the network idle time. How long does the network spend with no outstanding requests, as this indicates an inability to successfully pipeline data for a collective. One caveat is that it may be desired to differentiate times when a collective is actually functioning but no network requests are outstanding from when the application isn't doing any computation. The collective libraries have this information and thus can export such data. Alternatively, if monitoring is occurring at a lower layer in the stack, similar data may be obtained or determined based on the duration of the idle time. Idles within a collective will be individually short, whereas idle between collectives will be a single long lived idle.

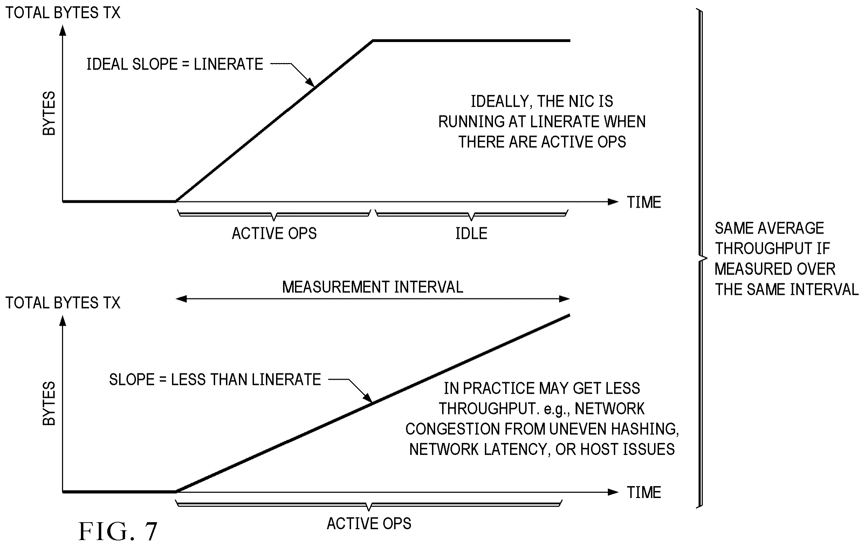

With respect to FIGURE 7, one data point of collective data that may be utilized in embodiment is how fast a network interface (e.g., NIC) is at a rank in a collective sending traffic while, or when, that rank has actual outstanding requests. The average bandwidth (b/w) from network interface (e.g., NIC) data is not as useful because it may be difficult to disambiguate a network interface (e.g., NIC) being idle because there is nothing to send as compared to a network interface (e.g., NIC) being slow because the network is slow. In general, this throughput metric can be applied to any resource, including a GPU.

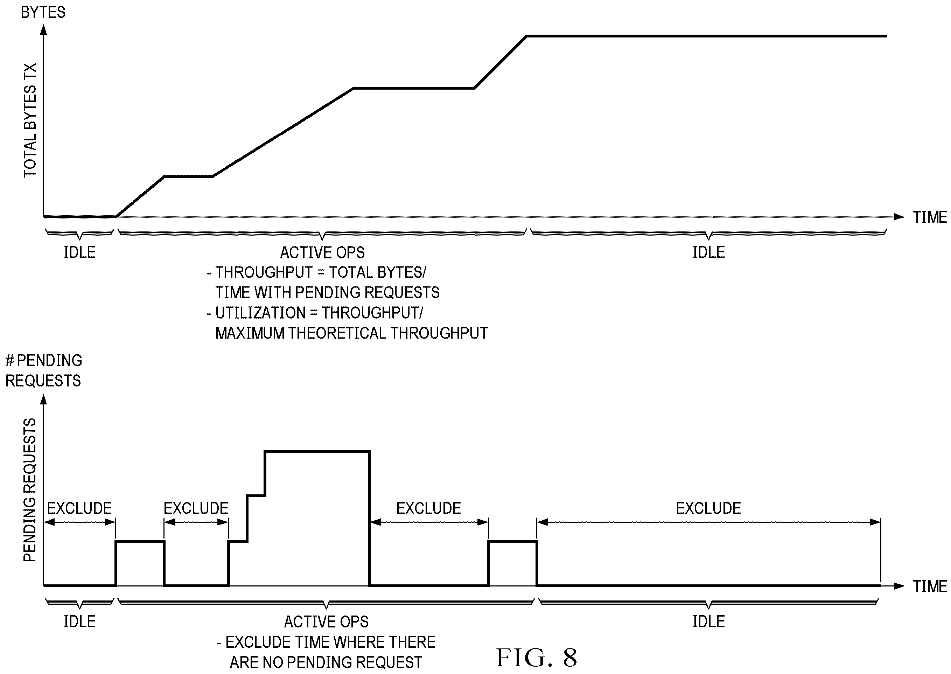

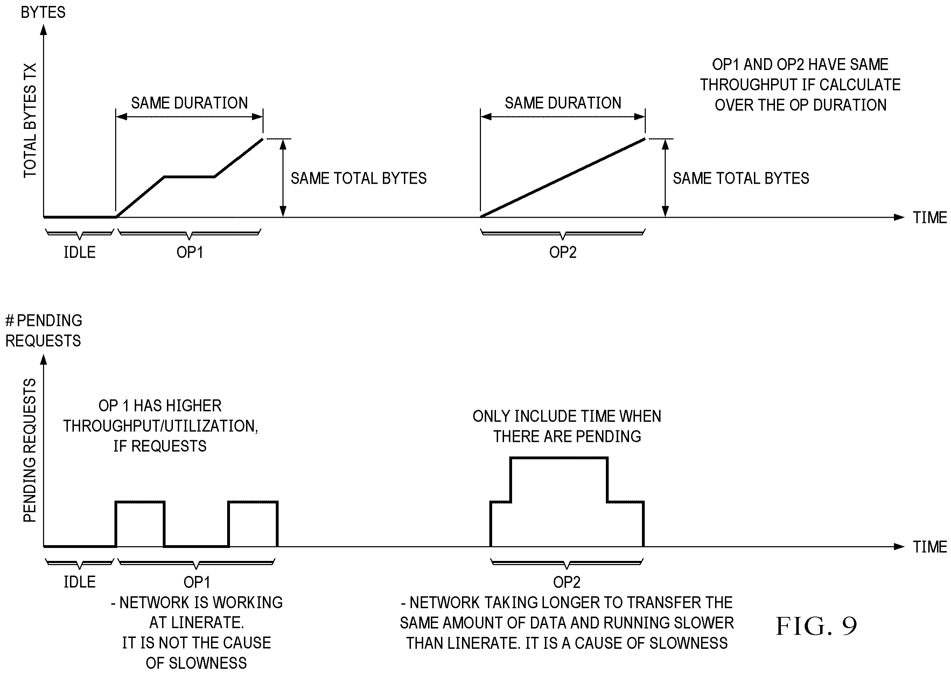

FIGURES 8 and 9 depict the calculation of throughput according to embodiments. When calculating the resource throughput, it may be desirable to only include the time when there are pending requests. In the case of a network interface (e.g., NIC), a pending request is when the software enqueues a RMDA write to the network interface. Accordingly, by only including time when there are pending requests it can be determined if the data transfer of the network interface (e.g., NIC) is slow, or if the network interface (e.g., NIC) is under-running because the software is not keeping it filled with requests.

These types of throughputs may be referred to as raw throughput (e.g., without accounting for when there are pending requests) and idle adjusted throughput. To illustrate formulaically: idle adjusted throughput = tx_bytes / tx_time while raw throughput = tx_bytes / (tx_time + idle_time) where tx_time is time when there is pending request and where idle_time is when there is no pending request and op is active. In this case, work ratio = raw_throughput / idle_adjusted_throughput = tx_time / (tx_time + idle_time), in case idle_time = 0, then work ratio = 1.

Embodiments may be implemented in association with the monitoring of work requests on a network interface (e.g., NIC). For every work request, the amount of data that needs to be transferred may be known or determined. Based on the data and the link speed, an estimated completion time can be calculated. This is added to a "finish" time associated with the NIC. When a network interface (e.g., NIC) does go idle with no outstanding work requests, the actual finish time can be compared to the estimated finish time based on the amount of data that was enqueued. The difference between the two is a networking slowdown, which can be calculated as both an absolute value and relative to the amount of data that was sent. For example:

$$\text{TOTALTXBYTES} = 0$$

$$\text{TOTALTXTIME} = 0$$

$$\text{TOTALIDLETIME} = 0$$

$$\text{TXPENDINGBYTES} = 0$$

$$\text{TXSTARTTIME} = \text{NULL}$$

$$\text{IDLESTARTTIME} = \text{NULL}$$

```
On SEND:

IF TXPENDINGBYTES == 0:

    // an op is started, and we were previously idle.

    TXSTARTTIME = CUR_TIME

    IF IDLESTARTTIME != NULL:

        // accumulate idle time

        TOTALIDLETIME += CUR_TIME - IDLESTARTTIME

TXPENDINGBYTES += SIZE


On SEND_COMPLETE:

TOTALTXBYTES += SIZE

TXPENDINGBYTES -= SIZE

IF TXPENDINGBYTES == 0:

    // we are going idle

    TOTALTXTIME += CUR_TIME - TXSTARTTIME

    IDLESTARTTIME = CUR_TIME

    TXSTARTTIME = NULL

Throughput = TOTALTXBYTES / TOTALTXTIME
```

Embodiments may also utilize a work ratio for determination of slow or failing ranks (or a slow or failing network). The work ratio is the amount of time the resource is working while an op is active. If a resource has a work ratio < 1, it may not be being fed data fast enough. It is possible to have a work ratio < 1, while throughput is 100% (resource is underrunning, but running as fast as possible), or work ratio 1 and throughout < 100% max (resource is not underrunning, but running slower than max rate). To illustrate: work ratio = TOTALTXTIME / (TOTALTXTIME + TOTALIDLETIME), Idle ratio = TOTALIDLETIME / (TOTALTXTIME + TOTALIDLETIME) = 1 - work ratio.

In some embodiments, a startup skew detection from initial delay from CTS to data received may be accounted for when analyzing or determining data. To illustrate in more detail, many distributed applications run in a loop where they do computation followed by network synchronization on that communication. The computation that each rank does is generally identical, so it is expected that every rank will take the same amount of time to process the data. This means that on average, every rank should arrive at the network step at the same time. If one rank is slightly slower in doing the processing than others, then it will arrive at the network step later than its peers. Thus, if relative times can be detected for when the network step starts, it can potentially detect when certain processes are slower than others.

To determine such a skew, a timestamp for when a packet or message is sent after having been idle for a (e.g., threshold) period of time may be detected. Likewise, a timestamp can be detected for when a packet or message is first received. Those two timestamps can then be compared. If packets are consistently received (e.g., by a rank) earlier than (e.g., a rank) sends a request, that likely means that (e.g., the rank is) running slower than other ranks in a collective. Conversely, if (a rank) sends before it receives, it may be running faster.

An alternative or additional way to measure this is to compare (a time) when (a rank in the collective) sends a notification that (the rank in the collective is) ready to receive data to (a time) when (the rank) receives the first chunk of data per op. Generally, (a rank in the collective) will send a CTS as soon as a buffer is available. This can be when a network communication is enqueued in a queue. However, the data arrives only when the computation is done. Thus, this data can effectively measure the time between when the software enqueues the network request and executes it, which in many cases will be the time taken to process the data. Over time, with enough samples, a statistically significant result may be obtained.

Additionally, in some embodiment timestamps for receiving versus sending a step in the collective may be utilized to determine processing time at a rank in the collective (e.g., a node). In a recursive collective like a ring or a tree, a rank will receive a chunk of data. It will process that data locally and then transmit the data to the next node in the collective. Any node that takes longer than expected to process the data will slow down the collective as a whole. Therefore, noticing degradation in this processing time may be important for monitoring the performance of the collective as a whole.

This behavior can be observed by timestamping the rx time of a specific step and correlating that to the tx time of the same step. The difference is the processing time, which should stay relatively constant. If the processing time increases, it indicates that the node is either running slow or backed up due to nodes further ahead in the collective.

It may be useful here to go into a bit more detail regarding the determination of startup timing with respect to nodes of a collective. As discussed, collective computation (e.g., completion) time is of interest in determining slow or failed ranks or network issues. This collective computation time can be broken into two main components: startup latency (startup_latency) and streaming time (streaming_time). The startup latency is the time it takes for the first fully reduced data to reach a node. After the startup latency, the rest of the reduced data is streamed. Thus, startup latency data is of interest in determining in slow or failed ranks, or whether a network is experiencing errors. By tracking how long the startup steps took on every rank (node) of a collective embodiments may determine a startup latency of a collective based on knowledge of the topology of a collective (e.g., by taking the max of values of nodes on which they depend and finding the max value, etc.).

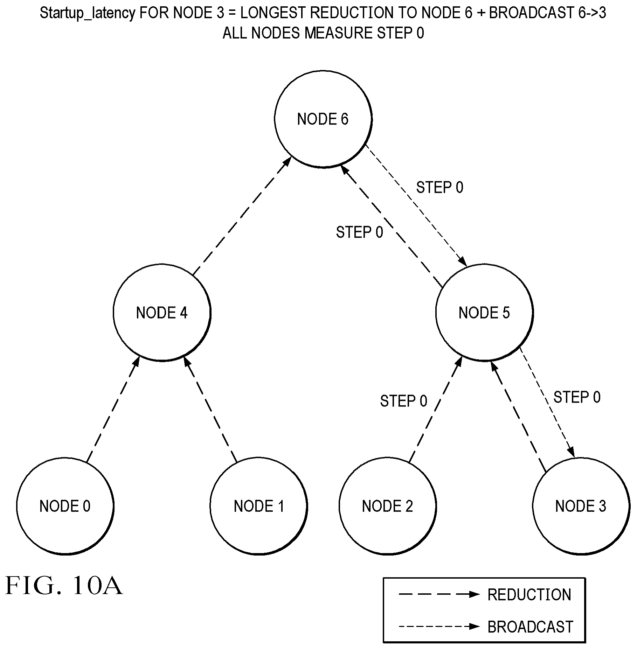

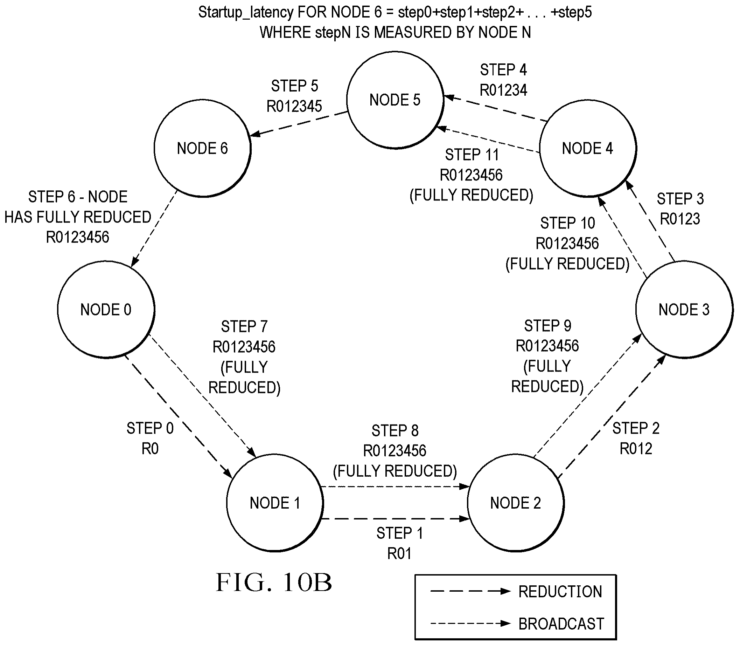

Turning to FIGURES 10A and 10B, FIGURE 10A is a depiction of determining startup latency in an example tree topology for a collective while FIGURE 10B is a depiction of determining startup latency in an example ring topology for a collective. For a tree, startup latency for a leaf node is the (e.g., longest) time it takes to reduce up, and broadcast down the tree: ~log(n) hops. For a ring, the startup latency is (n-1) hops. For a tree, the startup latency can be measured by adding the time it takes an (e.g., initial) step to propagate through the paths of the tree. For example, by adding time it takes step 0 (the initial processing step or initial communication) to propagate along the paths of the tree collective. To illustrate, for the specific tree collective depicted in FIGURE 10A the startup latency for NODE 3 will be the (longest) reduction time to NODE 6 (e.g., of the reductions from NODE 3 to NODE 5 and NODE 5 to NODE 6) along with the broadcast time from NODE 6 to NODE 3. Each step consists of tx serialization delay + rx processing delay. For a ring, the startup latency can be measured by adding the first n-1 step times for rank n->n+1 together.

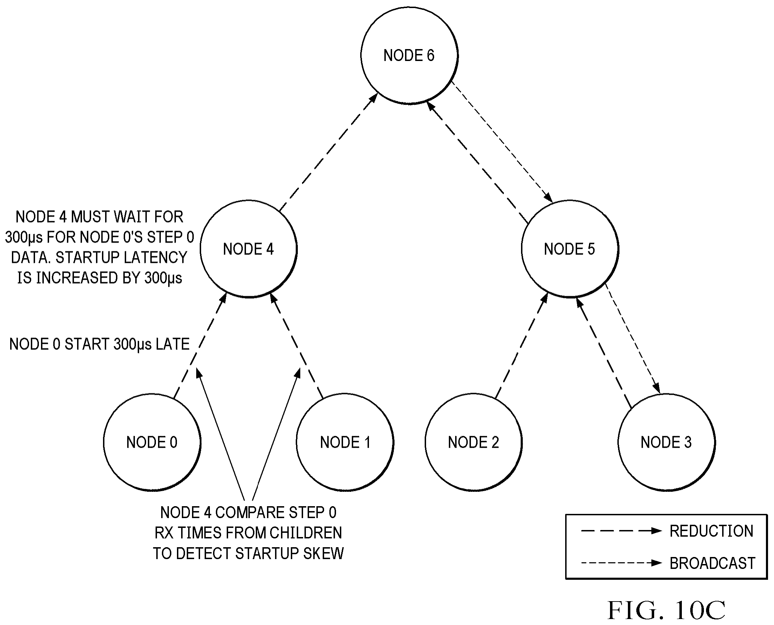

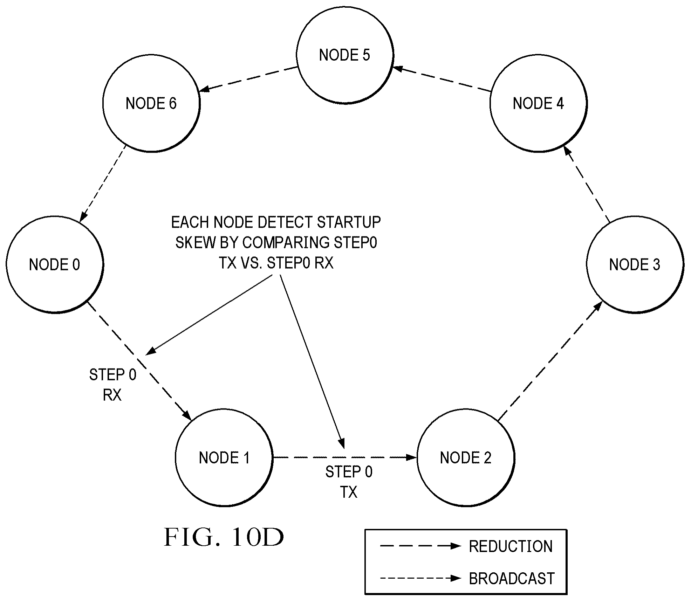

One component of startup latency is startup skew. Startup skew is usually dependent on the offsets of startup time for the ranks or nodes (or machines hosting such ranks) comprising the collective. Specifically, in practice, nodes do not start collective computation completion time at exactly the same time. This increases the time to complete the distributed computation due to data dependency. FIGURES 10C and 10D depict examples of determining startup skew based on a topology of a collective. FIGURE 10C depicts a determination of startup skew when a collective topology is a tree while FIGURE 10D depicts a determination of a startup skew in a ring topology for a collective. For a tree, a parent node cannot start step N, until it has received step N data from its children. For a ring, a node cannot send N+1 data until it has received step N from the previous node.

Accordingly, for a tree topology, startup skew can be detected by looking at the step 0 time for the two children in a reduction path. For a ring topology, startup skew can be detected by looking at the step 0 difference between tx to next (tx) versus rx from prev (rx). In practice, a server may comprise multiple ranks of a collective. For example, certain server systems will have 8 GPU nodes per server. Thus, a data set may be split into X parallel compute graphs. If all nodes in a server have the same startup skew, the server likely started late. If only some nodes within a server are skewed, it is possible that some cores within the server started skewed.

Certain embodiments may determine idle time (or utilize a determined idle time) to determine slow or failing ranks (or a slow or failing network). A resource is idle if there are no pending requests to it. For example, a network interface (e.g., NIC) is idle if there are no pending tx requests. There may be two types of idle time. A first type of idle time is relating to idleness when an op is active. If a resource goes idle while an op is active, the resource is under-running. Another type of idle time relates to idleness when there are no active ops. This type of idleness may be termed extra capacity.

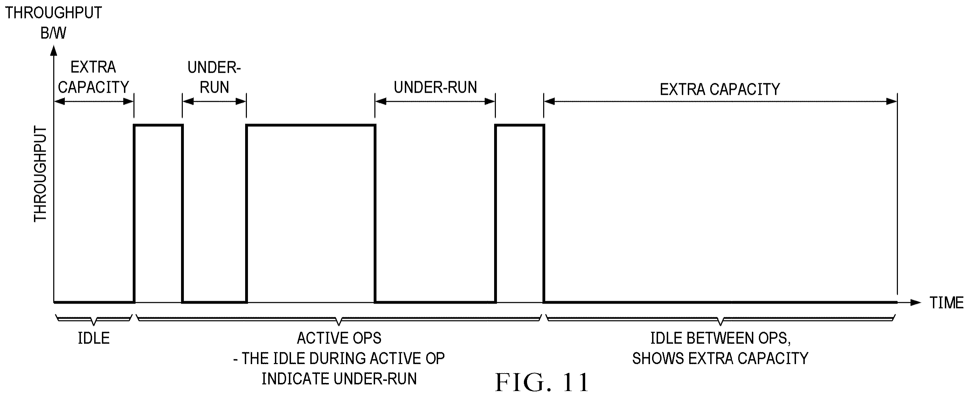

FIGURE 11 depicts the two types of idle time according to one embodiment. It separates the idle due to no active ops and idle with active ops. Idle during active ops indicates a resource under-run. Idle with no active ops indicates extra resource capacity. While calculating the above throughput rate of the network interface (e.g., NIC), it can be determined how much of that was due to idle time within the collective versus the network interface (e.g., NIC) taking longer than expected to actually execute work requests. Additionally, it can be determined how much extra capacity exists while the network interface (e.g., NIC) is completely idle.

Embodiments may also determine throughput and work ratio using a fill level to assist in determining slow or failed ranks or a slow or failing network. In particular, throughput and work ratio can be determined based on transitions from 0 -> 1 or more pending requests (going active), and 1->0 pending requests (going idle). In some cases, a more complete picture of the time spent at different fill levels is tracked. A fill level is the number of pending requests or the corresponding amount of bytes. For example, if an RMDA_WRITE of 1M bytes is enqueued, a fill level would increment by 1 pending request or 1M bytes. With this information, it is possible to track if a resource under-runs, and how close to under-run a resource gets. A resource that has more outstanding requests has more elasticity and is less likely to under-run.

Thus, for example, a fill level may be tracked as follows:

On Send:

If ACTIVE:

// track time while op are active

Bucket = pending_requests - complete_requests

Time[bucket] += now - last_time

ELSE:

// add to capacity bucket

Extra_capacity += now - last_time

Last_time = now

Pending_requests++

On Completion:

// only get completions while active

Bucket = pending_requests - complete_requests

Time[bucket] += now - last_time

Last_time = now

Complete_requests++

If it is desired to track the fill level in bytes, requests could be separated or processed based on an associated number of bytes and each bucket would represent a range of bytes:

Bucket = pending_tx_bytes / bytes_per_bucket

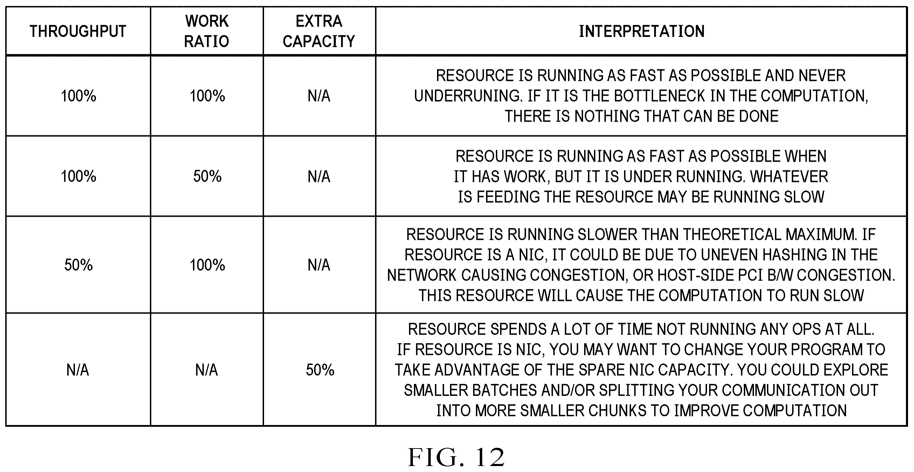

The determined data (e.g., as exported from ranks in a collective or as determined from such data), including throughput, work ratio or extra capacity may be interpreted or analyzed to make determinations about the resource(s) associated with the collective computing environment. In certain cases, to determine such data, the topology can be walked (e.g., data associated with collectives in the topology can be analyzed). Examples of such interpretations are depicted in FIGURE 12.

In some of the embodiments listed above, methods for extracting data from individual ranks have been listed. In all cases, this data can be further contextualized by considering it within the individual topologies the nodes are using. In particular, discontinuities of measurements may be most interesting, where there is a substantial difference in a measurement between a rank and the rank that it is sending or receiving from. Additionally, ranks of interest can be identified by comparing the statistics of measured variables across all ranks in the job. Any rank with a mean or standard deviation significantly different from other ranks in the same job should be examined more closely. In this way, aggregating the collected data from each rank across all ranks and viewing in context may provide for a much better analysis of occurrences in, or the state of, the network.

As discussed above, in many cases it may be desired for collective data reporting agents on devices (e.g., nodes) implementing ranks within a collective to implement certain techniques to adjust the start time or completion time of data associated with a communication request collected at that device based on determined (unaccounted for) idle time of a NIC at the device. For example, in certain instances there may be times in which a NIC at the device was idle that are difficult to observe, as the NIC may have to wait for an acknowledgement from a receiver of a communication before completion of that communication can be reported. Thus, the observed completion times of the communication of requests may include some idle time. While completion times may be ordered regardless of an acknowledgement delay, and the acknowledgement delay may not change the ordering of the observed completion times, if the observed completion times include some potentially significant idle time (e.g., if the acknowledgement delay is significant relative to the time to "data sent to dst") if those acknowledgement times are not accounted for the adjusted throughput may be the same or similar to the raw throughput; thus preventing the detection of slow or failed ranks.

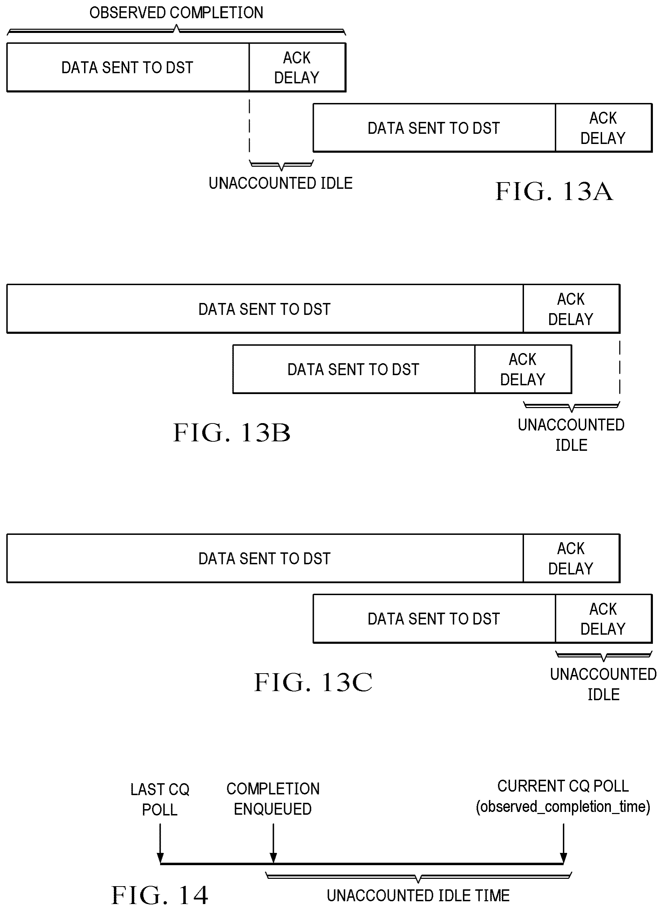

FIGURES 13A, 13B, and 13C depict examples of such unaccounted for idle time. Here, as a result of multiple communications being sent by a rank at particular intervals or which some time of on another, it may be determined that there are outstanding communications (transaction) during that time period even though the NIC was actually idle during at least some portion of that time period (e.g., because it cannot be determined that a communication was complete until an acknowledgement was received). This is called unaccounted for idle time. Each of FIGURES 13A, 13B and 13C depict scenarios where it may be deemed that outstanding transactions are pending even though at least some of that time the NIC is idle (e.g., unaccounted for idle time). This unaccounted for idle time may actually be quite significant, as the acknowledgement delay may, in certain cases, consume as much time as the actual time it takes to send data to a destination.

Thus, to account for this idle time (e.g., the unaccounted for idle time) and to make more accurate determinations of completion times for transmit (tx) events at each rank, each rank may keep a history of recent communications (e.g., tx events) and adjust completion times of those event based on a correction factor. These adjusted completion times can then be used to adjust a total idle time (or busy or transmit time) associated with that rank.

To bound the number of tx events in the history (e.g., with O(1) performance), embodiments may utilize the following algorithm. History may be kept as a set (e.g., circular array) of (start, adjusted_completion) times (e.g., for tx events), where start is when a tx event is enqueued to the NIC at the device, and the adjusted_completion = max( observed_completion - correction_factor, min_serialization_delay). The correction factor can be some percentage of a minimum observed completion time in order to account for the RTT latency through the network, and the NIC delay in processing the ACK and reporting a completion.

Thus, embodiments may operate as follows: on tx of an event, a (start, - ) entry may be appended to the (circular array of) history. This event is pending. A pending event is an event without an adjusted_completion time. After appending the event to the circular array, any pending event with a start time < now - correction, can be processed. If the addition of this event would wrap the circular array, the entry that is wrapped can be popped off the history (circular array) as it is assumed that entry in the circular array will not contribute to any idle time.

On completion of an event, update adjusted_completion time, and pop off events of the history if there are no pending events in the circular array with a start time < adjusted_completion time. Since the start times are guaranteed to be increasing, only checks for popping the head event may be needed (since uncompleted head start time is < non-head start time).

The following shows an example. Here, assume correction = 10. Event 0 starts at 100, vent 1 starts at 120. Now suppose event 0 completes at 125 with adjusted_completion = 125-10 (e.g., the correction factor)=115. Since 115 < 120, we can safely accumulate 5 into collective idle time determination. And 15 into the total tx time.

| Pending event | start | adjusted_completion |
| --- | --- | --- |
| 0 | 100 | 115 |
| 1 | 120 | - |

Another source of unaccounted for idle time is from the latency of the polling of a completion queue (cq) to determine if a tx event has been completed. A completion time can thus only be observed after such polling occurs. Thus, the polling interval at which the cq of the NIC is polled contributes to a determination of idle time. FIGURE 14 depicts an example of how this polling continued to unaccounted for idle time. To correct for this idle time, embodiments may save the last cq poll time every time a cq poll is conducted, and apply some correction factor based on this saved poll time: adjusted_completion_time = observed_completion_time - ((current_cq_poll_time - last_cq_poll_time) * correction_factor). Assuming the true completion time is uniformly distributed between last_cq_poll and current_cq_poll, the correction_factor may be 0.5.

It will be understood that while specific embodiments have been presented herein, these embodiments are merely illustrative, and not restrictive. Rather, the description is intended to describe illustrative embodiments, features and functions in order to provide an understanding of the embodiments without limiting the disclosure to any particularly described embodiment, feature, or function, including any such embodiment, feature, or function described. While specific embodiments of, and examples for, the embodiments are described herein for illustrative purposes only, various equivalent modifications are possible within the spirit and scope of the invention, as those skilled in the relevant art will recognize and appreciate.

As indicated, these modifications may be made in light of the foregoing description of illustrated embodiments and are to be included within the spirit and scope of the disclosure. Thus, while particular embodiments are described, a latitude of modification, various changes and substitutions are intended in the foregoing disclosures, and it will be appreciated that in some instances some features of embodiments of the invention will be employed without a corresponding use of other features, and features described with respect to one embodiment may be combined with features of other embodiments without departing from the scope and spirit of the disclosure as set forth.

Appendix A

numGPU: 2

    rank: 0 txReady: 4 rxPending: 6 rxComplete: 2 txPending: 0 txComplete: 0
    rank: 1 txReady: 0 rxPending: 4 rxComplete: 0 txPending: 2 txComplete: 2

numGPU: 3

    rank: 0 txReady: 4 rxPending: 6 rxComplete: 4 txPending: 0 txComplete: 0
    rank: 1 txReady: 0 rxPending: 4 rxComplete: 0 txPending: 2 txComplete: 2
    rank: 2 txReady: 0 rxPending: 6 rxComplete: 2 txPending: 4 txComplete: 4

numGPU: 4

    rank: 0 txReady: 4 rxPending: 6 rxComplete: 6 txPending: 0 txComplete: 0
    rank: 1 txReady: 0 rxPending: 4 rxComplete: 0 txPending: 2 txComplete: 2
    rank: 2 txReady: 0 rxPending: 6 rxComplete: 2 txPending: 4 txComplete: 4
    rank: 3 txReady: 0 rxPending: 8 rxComplete: 4 txPending: 6 txComplete: 6

numGPU: 5

    rank: 0 txReady: 4 rxPending: 6 rxComplete: 6 txPending: 0 txComplete: 0
    rank: 1 txReady: 0 rxPending: 4 rxComplete: 0 txPending: 2 txComplete: 2
    rank: 2 txReady: 0 rxPending: 6 rxComplete: 2 txPending: 4 txComplete: 4
    rank: 3 txReady: 0 rxPending: 8 rxComplete: 4 txPending: 6 txComplete: 6
    rank: 4 txReady: 2 rxPending: 10 rxComplete: 6 txPending: 6 txComplete: 6

numGPU: 6

    rank: 0 txReady: 4 rxPending: 6 rxComplete: 6 txPending: 0 txComplete: 0
    rank: 1 txReady: 0 rxPending: 4 rxComplete: 0 txPending: 2 txComplete: 2
    rank: 2 txReady: 0 rxPending: 6 rxComplete: 2 txPending: 4 txComplete: 4
    rank: 3 txReady: 0 rxPending: 8 rxComplete: 4 txPending: 6 txComplete: 6
    rank: 4 txReady: 0 rxPending: 10 rxComplete: 6 txPending: 8 txComplete: 8
    rank: 5 txReady: 4 rxPending: 12 rxComplete: 8 txPending: 6 txComplete: 6

numGPU: 7

    rank: 0 txReady: 4 rxPending: 6 rxComplete: 6 txPending: 0 txComplete: 0
    rank: 1 txReady: 0 rxPending: 4 rxComplete: 0 txPending: 2 txComplete: 2

rank: 2 txReady: 0 rxPending: 6 rxComplete: 2 txPending: 4 txComplete: 4
rank: 3 txReady: 0 rxPending: 8 rxComplete: 4 txPending: 6 txComplete: 6
rank: 4 txReady: 0 rxPending: 10 rxComplete: 6 txPending: 8 txComplete: 8
rank: 5 txReady: 0 rxPending: 12 rxComplete: 8 txPending: 10 txComplete: 10
rank: 6 txReady: 4 rxPending: 12 rxComplete: 10 txPending: 6 txComplete: 6

numGPU: 8

rank: 0 txReady: 4 rxPending: 6 rxComplete: 6 txPending: 0 txComplete: 0
rank: 1 txReady: 0 rxPending: 4 rxComplete: 0 txPending: 2 txComplete: 2
rank: 2 txReady: 0 rxPending: 6 rxComplete: 2 txPending: 4 txComplete: 4
rank: 3 txReady: 0 rxPending: 8 rxComplete: 4 txPending: 6 txComplete: 6
rank: 4 txReady: 0 rxPending: 10 rxComplete: 6 txPending: 8 txComplete: 8
rank: 5 txReady: 0 rxPending: 12 rxComplete: 8 txPending: 10 txComplete: 10
rank: 6 txReady: 0 rxPending: 14 rxComplete: 10 txPending: 12 txComplete: 12
rank: 7 txReady: 4 rxPending: 12 rxComplete: 12 txPending: 6 txComplete: 6

numGPU: 9

rank: 0 txReady: 4 rxPending: 6 rxComplete: 6 txPending: 0 txComplete: 0
rank: 1 txReady: 0 rxPending: 4 rxComplete: 0 txPending: 2 txComplete: 2
rank: 2 txReady: 0 rxPending: 6 rxComplete: 2 txPending: 4 txComplete: 4
rank: 3 txReady: 0 rxPending: 8 rxComplete: 4 txPending: 6 txComplete: 6
rank: 4 txReady: 0 rxPending: 10 rxComplete: 6 txPending: 8 txComplete: 8
rank: 5 txReady: 0 rxPending: 12 rxComplete: 8 txPending: 10 txComplete: 10
rank: 6 txReady: 0 rxPending: 14 rxComplete: 10 txPending: 12 txComplete: 12
rank: 7 txReady: 2 rxPending: 16 rxComplete: 12 txPending: 12 txComplete: 12
rank: 8 txReady: 4 rxPending: 12 rxComplete: 12 txPending: 6 txComplete: 6

numGPU: 10

rank: 0 txReady: 4 rxPending: 6 rxComplete: 6 txPending: 0 txComplete: 0
rank: 1 txReady: 0 rxPending: 4 rxComplete: 0 txPending: 2 txComplete: 2
rank: 2 txReady: 0 rxPending: 6 rxComplete: 2 txPending: 4 txComplete: 4
rank: 3 txReady: 0 rxPending: 8 rxComplete: 4 txPending: 6 txComplete: 6
rank: 4 txReady: 0 rxPending: 10 rxComplete: 6 txPending: 8 txComplete: 8
rank: 5 txReady: 0 rxPending: 12 rxComplete: 8 txPending: 10 txComplete: 10
rank: 6 txReady: 0 rxPending: 14 rxComplete: 10 txPending: 12 txComplete: 12
rank: 7 txReady: 0 rxPending: 16 rxComplete: 12 txPending: 14 txComplete: 14
rank: 8 txReady: 4 rxPending: 18 rxComplete: 14 txPending: 12 txComplete: 12
rank: 9 txReady: 4 rxPending: 12 rxComplete: 12 txPending: 6 txComplete: 6

numGPU: 11

rank: 0 txReady: 4 rxPending: 6 rxComplete: 6 txPending: 0 txComplete: 0
rank: 1 txReady: 0 rxPending: 4 rxComplete: 0 txPending: 2 txComplete: 2
rank: 2 txReady: 0 rxPending: 6 rxComplete: 2 txPending: 4 txComplete: 4
rank: 3 txReady: 0 rxPending: 8 rxComplete: 4 txPending: 6 txComplete: 6
rank: 4 txReady: 0 rxPending: 10 rxComplete: 6 txPending: 8 txComplete: 8
rank: 5 txReady: 0 rxPending: 12 rxComplete: 8 txPending: 10 txComplete: 10
rank: 6 txReady: 0 rxPending: 14 rxComplete: 10 txPending: 12 txComplete: 12
rank: 7 txReady: 0 rxPending: 16 rxComplete: 12 txPending: 14 txComplete: 14
rank: 8 txReady: 0 rxPending: 18 rxComplete: 14 txPending: 16 txComplete: 16
rank: 9 txReady: 4 rxPending: 18 rxComplete: 16 txPending: 12 txComplete: 12
rank:10 txReady: 4 rxPending: 12 rxComplete: 12 txPending: 6 txComplete: 6

numGPU: 12

```
rank: 0 txReady: 4 rxPending: 6 rxComplete: 6 txPending: 0 txComplete: 0
rank: 1 txReady: 0 rxPending: 4 rxComplete: 0 txPending: 2 txComplete: 2
rank: 2 txReady: 0 rxPending: 6 rxComplete: 2 txPending: 4 txComplete: 4
rank: 3 txReady: 0 rxPending: 8 rxComplete: 4 txPending: 6 txComplete: 6
rank: 4 txReady: 0 rxPending: 10 rxComplete: 6 txPending: 8 txComplete: 8
rank: 5 txReady: 0 rxPending: 12 rxComplete: 8 txPending: 10 txComplete: 10
rank: 6 txReady: 0 rxPending: 14 rxComplete: 10 txPending: 12 txComplete: 12
rank: 7 txReady: 0 rxPending: 16 rxComplete: 12 txPending: 14 txComplete: 14
rank: 8 txReady: 0 rxPending: 18 rxComplete: 14 txPending: 16 txComplete: 16
rank: 9 txReady: 0 rxPending: 20 rxComplete: 16 txPending: 18 txComplete: 18
rank:10 txReady: 4 rxPending: 18 rxComplete: 18 txPending: 12 txComplete: 12
rank:11 txReady: 4 rxPending: 12 rxComplete: 12 txPending: 6 txComplete: 6


numGPU: 13


rank: 0 txReady: 4 rxPending: 6 rxComplete: 6 txPending: 0 txComplete: 0
rank: 1 txReady: 0 rxPending: 4 rxComplete: 0 txPending: 2 txComplete: 2
rank: 2 txReady: 0 rxPending: 6 rxComplete: 2 txPending: 4 txComplete: 4
rank: 3 txReady: 0 rxPending: 8 rxComplete: 4 txPending: 6 txComplete: 6
rank: 4 txReady: 0 rxPending: 10 rxComplete: 6 txPending: 8 txComplete: 8
rank: 5 txReady: 0 rxPending: 12 rxComplete: 8 txPending: 10 txComplete: 10
rank: 6 txReady: 0 rxPending: 14 rxComplete: 10 txPending: 12 txComplete: 12
rank: 7 txReady: 0 rxPending: 16 rxComplete: 12 txPending: 14 txComplete: 14
rank: 8 txReady: 0 rxPending: 18 rxComplete: 14 txPending: 16 txComplete: 16
rank: 9 txReady: 0 rxPending: 20 rxComplete: 16 txPending: 18 txComplete: 18
rank:10 txReady: 2 rxPending: 22 rxComplete: 18 txPending: 18 txComplete: 18
rank:11 txReady: 4 rxPending: 18 rxComplete: 18 txPending: 12 txComplete: 12
rank:12 txReady: 4 rxPending: 12 rxComplete: 12 txPending: 6 txComplete: 6


numGPU: 14


rank: 0 txReady: 4 rxPending: 6 rxComplete: 6 txPending: 0 txComplete: 0
rank: 1 txReady: 0 rxPending: 4 rxComplete: 0 txPending: 2 txComplete: 2
rank: 2 txReady: 0 rxPending: 6 rxComplete: 2 txPending: 4 txComplete: 4
rank: 3 txReady: 0 rxPending: 8 rxComplete: 4 txPending: 6 txComplete: 6
rank: 4 txReady: 0 rxPending: 10 rxComplete: 6 txPending: 8 txComplete: 8
rank: 5 txReady: 0 rxPending: 12 rxComplete: 8 txPending: 10 txComplete: 10
rank: 6 txReady: 0 rxPending: 14 rxComplete: 10 txPending: 12 txComplete: 12
rank: 7 txReady: 0 rxPending: 16 rxComplete: 12 txPending: 14 txComplete: 14
rank: 8 txReady: 0 rxPending: 18 rxComplete: 14 txPending: 16 txComplete: 16
rank: 9 txReady: 0 rxPending: 20 rxComplete: 16 txPending: 18 txComplete: 18
rank:10 txReady: 0 rxPending: 22 rxComplete: 18 txPending: 20 txComplete: 20
rank:11 txReady: 4 rxPending: 24 rxComplete: 20 txPending: 18 txComplete: 18
rank:12 txReady: 4 rxPending: 18 rxComplete: 18 txPending: 12 txComplete: 12
rank:13 txReady: 4 rxPending: 12 rxComplete: 12 txPending: 6 txComplete: 6


numGPU: 15


rank: 0 txReady: 4 rxPending: 6 rxComplete: 6 txPending: 0 txComplete: 0
rank: 1 txReady: 0 rxPending: 4 rxComplete: 0 txPending: 2 txComplete: 2
rank: 2 txReady: 0 rxPending: 6 rxComplete: 2 txPending: 4 txComplete: 4
rank: 3 txReady: 0 rxPending: 8 rxComplete: 4 txPending: 6 txComplete: 6
rank: 4 txReady: 0 rxPending: 10 rxComplete: 6 txPending: 8 txComplete: 8
rank: 5 txReady: 0 rxPending: 12 rxComplete: 8 txPending: 10 txComplete: 10
rank: 6 txReady: 0 rxPending: 14 rxComplete: 10 txPending: 12 txComplete: 12
rank: 7 txReady: 0 rxPending: 16 rxComplete: 12 txPending: 14 txComplete: 14
rank: 8 txReady: 0 rxPending: 18 rxComplete: 14 txPending: 16 txComplete: 16
rank: 9 txReady: 0 rxPending: 20 rxComplete: 16 txPending: 18 txComplete: 18
```

rank:10 txReady: 0 rxPending: 22 rxComplete: 18 txPending: 20 txComplete: 20
rank:11 txReady: 0 rxPending: 24 rxComplete: 20 txPending: 22 txComplete: 22
rank:12 txReady: 4 rxPending: 24 rxComplete: 22 txPending: 18 txComplete: 18
rank:13 txReady: 4 rxPending: 18 rxComplete: 18 txPending: 12 txComplete: 12
rank:14 txReady: 4 rxPending: 12 rxComplete: 12 txPending: 6 txComplete: 6

numGPU: 16

rank: 0 txReady: 4 rxPending: 6 rxComplete: 6 txPending: 0 txComplete: 0
rank: 1 txReady: 0 rxPending: 4 rxComplete: 0 txPending: 2 txComplete: 2
rank: 2 txReady: 0 rxPending: 6 rxComplete: 2 txPending: 4 txComplete: 4
rank: 3 txReady: 0 rxPending: 8 rxComplete: 4 txPending: 6 txComplete: 6
rank: 4 txReady: 0 rxPending: 10 rxComplete: 6 txPending: 8 txComplete: 8
rank: 5 txReady: 0 rxPending: 12 rxComplete: 8 txPending: 10 txComplete: 10
rank: 6 txReady: 0 rxPending: 14 rxComplete: 10 txPending: 12 txComplete: 12
rank: 7 txReady: 0 rxPending: 16 rxComplete: 12 txPending: 14 txComplete: 14
rank: 8 txReady: 0 rxPending: 18 rxComplete: 14 txPending: 16 txComplete: 16
rank: 9 txReady: 0 rxPending: 20 rxComplete: 16 txPending: 18 txComplete: 18
rank:10 txReady: 0 rxPending: 22 rxComplete: 18 txPending: 20 txComplete: 20
rank:11 txReady: 0 rxPending: 24 rxComplete: 20 txPending: 22 txComplete: 22
rank:12 txReady: 0 rxPending: 26 rxComplete: 22 txPending: 24 txComplete: 24
rank:13 txReady: 4 rxPending: 24 rxComplete: 24 txPending: 18 txComplete: 18
rank:14 txReady: 4 rxPending: 18 rxComplete: 18 txPending: 12 txComplete: 12
rank:15 txReady: 4 rxPending: 12 rxComplete: 12 txPending: 6 txComplete: 6

numGPU: 32

rank: 0 txReady: 4 rxPending: 6 rxComplete: 6 txPending: 0 txComplete: 0
rank: 1 txReady: 0 rxPending: 4 rxComplete: 0 txPending: 2 txComplete: 2
rank: 2 txReady: 0 rxPending: 6 rxComplete: 2 txPending: 4 txComplete: 4
rank: 3 txReady: 0 rxPending: 8 rxComplete: 4 txPending: 6 txComplete: 6
rank: 4 txReady: 0 rxPending: 10 rxComplete: 6 txPending: 8 txComplete: 8
rank: 5 txReady: 0 rxPending: 12 rxComplete: 8 txPending: 10 txComplete: 10
rank: 6 txReady: 0 rxPending: 14 rxComplete: 10 txPending: 12 txComplete: 12
rank: 7 txReady: 0 rxPending: 16 rxComplete: 12 txPending: 14 txComplete: 14
rank: 8 txReady: 0 rxPending: 18 rxComplete: 14 txPending: 16 txComplete: 16
rank: 9 txReady: 0 rxPending: 20 rxComplete: 16 txPending: 18 txComplete: 18
rank:10 txReady: 0 rxPending: 22 rxComplete: 18 txPending: 20 txComplete: 20
rank:11 txReady: 0 rxPending: 24 rxComplete: 20 txPending: 22 txComplete: 22
rank:12 txReady: 0 rxPending: 26 rxComplete: 22 txPending: 24 txComplete: 24
rank:13 txReady: 0 rxPending: 28 rxComplete: 24 txPending: 26 txComplete: 26
rank:14 txReady: 0 rxPending: 30 rxComplete: 26 txPending: 28 txComplete: 28
rank:15 txReady: 0 rxPending: 32 rxComplete: 28 txPending: 30 txComplete: 30
rank:16 txReady: 0 rxPending: 34 rxComplete: 30 txPending: 32 txComplete: 32
rank:17 txReady: 0 rxPending: 36 rxComplete: 32 txPending: 34 txComplete: 34
rank:18 txReady: 0 rxPending: 38 rxComplete: 34 txPending: 36 txComplete: 36
rank:19 txReady: 0 rxPending: 40 rxComplete: 36 txPending: 38 txComplete: 38
rank:20 txReady: 0 rxPending: 42 rxComplete: 38 txPending: 40 txComplete: 40
rank:21 txReady: 0 rxPending: 44 rxComplete: 40 txPending: 42 txComplete: 42
rank:22 txReady: 0 rxPending: 46 rxComplete: 42 txPending: 44 txComplete: 44
rank:23 txReady: 0 rxPending: 48 rxComplete: 44 txPending: 46 txComplete: 46
rank:24 txReady: 0 rxPending: 50 rxComplete: 46 txPending: 48 txComplete: 48
rank:25 txReady: 4 rxPending: 48 rxComplete: 48 txPending: 42 txComplete: 42
rank:26 txReady: 4 rxPending: 42 rxComplete: 42 txPending: 36 txComplete: 36
rank:27 txReady: 4 rxPending: 36 rxComplete: 36 txPending: 30 txComplete: 30
rank:28 txReady: 4 rxPending: 30 rxComplete: 30 txPending: 24 txComplete: 24
rank:29 txReady: 4 rxPending: 24 rxComplete: 24 txPending: 18 txComplete: 18
rank:30 txReady: 4 rxPending: 18 rxComplete: 18 txPending: 12 txComplete: 12

rank:31 txReady: 4 rxPending: 12 rxComplete: 12 txPending: 6 txComplete: 6

The disclosure in the application also includes the following numbered clauses:

1. A method for monitoring a distributed collective communication environment, comprising:

receiving collective data from each of a set of ranks communicating over a network in a communication collective, the collective data received from a rank comprising data associated with a state of that rank;

correlating the collective data from each of the set of ranks in the communication collective;

determining rank data on one or more ranks of the set of ranks of the communication collective based on the correlated collective data; and

presenting the rank data to a user.

2. The method of clause 1, wherein correlating the collective data is done based on a topology of the set of ranks and the rank data comprises data on a slow or failed rank determined dynamically while the set of ranks are executing.

3. The method of clause 1 or clause 2, wherein the collective data is received from a collective communication library utilized by each of the set of the ranks to communicate over the network in the communication collective.

4. The method of clause 2 or clause 3 when dependent upon clause 2, wherein the collective data received from the rank includes event data related to events occurring at the rank.

5. The method of clause 4, wherein the event data includes sender and receiver state counts.

6. The method of clause 5, wherein the slow or failed rank is determined as the rank with a lower or higher event count relative to other ranks of the communication collective.

7. The method of clause 2 or clause 3 when dependent upon clause 2, wherein the collective data received from the rank includes communication data associated with a time spent in a communication state by that rank.

8. The method of clause 7, wherein the slow or failed rank is determined based on the time spent in the communication state by each rank of the set of ranks.

9. The method of clause 8, wherein the communication state comprises waiting for a clear to send (CTS).

10. The method of clause 2 or clause 3 when dependent upon clause 2, wherein the collective data received from the rank includes network interface data associated with a network interface of that rank.

11. The method of clause 10, wherein the network interface data included a number of outstanding work requests to the network interface of the rank.

12. The method of clause 11, wherein the slow or failed rank is determined based on a histogram of outstanding work requests on the set of ranks of the communication collective.

13. A system, comprising:

a network monitoring system in communication with a set of ranks communicating in a communication collective in a network, wherein a rank comprises:

a first processor;

a first non-transitory computer readable medium comprising instructions executable for:

executing an application associated with the rank on the processor;

determining collective data for a state of the rank as the application is executing; and

providing the determined collective data to a network monitoring system;

wherein the network monitoring system comprises:

a second processor;
a second non-transitory computer readable medium comprising instructions executable for:

receiving collective data from the set of ranks in the communication collective;
correlating collective data from the set of ranks in the communication collective; and
determining a slow or failed rank of the set of ranks of the communication collective based on the correlated collective data during execution of the application by the ranks of the set of ranks.

14. The system of clause 13, wherein the first non-transitory computer readable medium comprises instructions for a collective communication library, the collective communication library comprising the instructions for providing the determined collective data to a network monitoring system.

15. The system of clause 13 or clause 14, wherein the rank comprises a network interface card (NIC) and the collective data is determined based on the state of the NIC at the rank.

16. The system of clause 15, wherein the slow or failed rank is determined based on a startup skew detection determined for each of the set of ranks based on the correlated collective data.

17. The system of clause 15, wherein the slow or failed rank is determined based on a network idle time determined for each of the set of ranks based on the correlated collective data.

18. The system of clause 17, wherein the network idle time includes an active work ratio.

19. The system of clause 17, wherein the network idle time includes an extra capacity idle time.

20. A non-transitory computer readable medium, comprising instructions for:

receiving collective data from the set of ranks communicating over a network in a communication collective, each of the ranks executing an application associated with the rank, wherein the collective data for a rank comprises a state of the rank as the application is executing;
determining network data associated with operation of the network as the application is executing;
correlating collective data from the set of ranks in the communication collective;
correlating the collective data with the network data; and
determining, in real-time during execution of the application by the set of ranks, a slow or failed rank of the set of ranks of the communication collective based on the correlated collective data and network data.

## Claims

1. A method for monitoring a distributed collective communication environment, comprising:

receiving collective data from each of a set of ranks communicating over a network in a communication collective, the collective data received from a rank comprising data associated with a state of that rank;
correlating the collective data from each of the set of ranks in the communication collective; and
determining a slow or failed rank of the set of ranks of the communication collective based on the correlated collective data while the set of ranks are executing.

2. The method of claim 1, wherein correlating the collective data is done based on a topology of the set of ranks.

3. The method of claim 1 or claim 2, wherein the collective data is received from a collective communication library utilized by each of the set of the ranks to communicate over the network in the communication collective.

4. The method of any preceding claim, wherein:

the collective data received from each rank includes event data related to events occurring at the rank;
the event data includes sender and receiver state counts; and
the slow or failed rank is determined as the rank with a lower or higher event count relative to other ranks of the communication collective.

5. The method of any of claims 1 to 3, wherein:

the collective data received from each rank includes communication data associated with a time spent in a communication state by that rank; and
the slow or failed rank is determined based on the time spent in the communication state by each rank of the set of ranks.

6. The method of claim 5, wherein the communication state comprises waiting for a clear to send (CTS).

7. The method of any preceding claim, wherein:

the collective data received from each rank includes network interface data associated with a network interface of that rank;
the network interface data includes a number of outstanding work requests to the network interface of the rank; and
the slow or failed rank is determined based on a histogram of outstanding work requests on the set of ranks of the communication collective.

8. The method of any preceding claim, wherein each rank comprises a network interface card (NIC) and the collective data is determined based on the state of the NIC at the rank.

9. The method of claim 8, wherein the slow or failed rank is determined based on a startup skew detection determined for each of the set of ranks based on the correlated collective data.

10. The method of claim 8, wherein the slow or failed rank is determined based on a network idle time determined for each of the set of ranks based on the correlated collective data.

11. The method of claim 10, wherein the network idle time includes an active work ratio.

12. The method of claim 10, wherein the network idle time includes an extra capacity idle time.

13. A system, comprising:

a network monitoring system in communication with a set of ranks communicating in a communication collective in a network, wherein a rank comprises:

a first processor;
a first non-transitory computer readable medium comprising instructions executable for:

executing an application associated with the rank on the processor;
determining collective data for a state of the rank as the application is executing; and
providing the determined collective data to the network monitoring system;

wherein the network monitoring system comprises:

a second processor;
a second non-transitory computer readable medium comprising instructions which, when executed by the second processor, cause the network monitoring system to perform a method according to at least one preceding claim.

14. The system of claim 13, wherein the first non-transitory computer readable medium comprises instructions for a collective communication library, the collective communication library comprising the instructions for providing the determined collective data to the network monitoring system.

15. A computer readable medium, comprising instructions which, when executed by at least one processor, cause the at least one processor to perform a method according to at least one of claims 1 to 12.

FIG. 1

TO OTHER RANKS IN COLLECTIVE

COLLECTIVE COMMUNICATION

202 ○ ○ ○ 202

COLLECTIVE COMMUNICATION

FROM OTHER RANKS IN COLLECTIVE

TO NETWORK MONITORING SYSTEM

236

COLLECTIVE DATA

NETWORK INTERFACE CARD (NIC)  240

232

COLLECTIVE COMMUNICATION LIBRARY

COLLECTIVE DATA REPORTING AGENT

234

COLLECTIVE DATA  236

COLLECTIVE DATA  236

COLLECTIVE DATA  236

COLLECTIVE COMMUNICATION

202 ○ ○ ○ 202

COLLECTIVE COMMUNICATION

COLLECTIVE COMMUNICATION

202 ○ ○ ○ 202

COLLECTIVE COMMUNICATION

(VIRTUAL OR PHYSICAL) DEVICE  200

(COLLECTIVE) APPLICATION  230

FIG. 2

EP 4 727 078 A1

FIG. 3

SENDER EVENTS                                    RECEIVER EVENTS

| SENDER | txPending++ → <br> ← txComplete++ | RECEIVER | | SENDER | ← rxPending++ <br> rxComplete++ → | RECEIVER |

## FIG. 4

EVENT UPDATES PER PROCESSING STEP

SENDER STATE

txReady++ <br> (GPU PRODUCE <br> DATA TO SEND)

rxPending++ (SEND <br> MESSAGE: AVAILABLE <br> RX BUFFER SPACE)

RECEIVER STATE

SENDER

txPending++ <br> (SEND DATA)

rxComplete++ <br> (RECEIVE DATA)

RECEIVER

txComplete++ <br> (RECEIVE ACK)

## FIG. 5

rxPending: ++LEVEL ←

rxComplete: --LEVEL →

RECEIVER

## FIG. 6

TOTAL BYTES TX

IDEAL SLOPE = LINERATE

IDEALLY, THE NIC IS
RUNNING AT LINERATE WHEN
THERE ARE ACTIVE OPS

BYTES

TIME

ACTIVE OPS          IDLE

SAME AVERAGE
THROUGHPUT IF
MEASURED OVER
THE SAME INTERVAL

MEASUREMENT INTERVAL

TOTAL BYTES TX

SLOPE = LESS THAN LINERATE

IN PRACTICE MAY GET LESS
THROUGHPUT. e.g., NETWORK
CONGESTION FROM UNEVEN HASHING,
NETWORK LATENCY, OR HOST ISSUES

BYTES

TIME

ACTIVE OPS

FIG. 7

FIG. 8

FIG. 9

Startup_latency FOR NODE 3 = LONGEST REDUCTION TO NODE 6 + BROADCAST 6->3
ALL NODES MEASURE STEP 0

FIG. 10A

| | |
|---|---|
| – – – –► | REDUCTION |
| - - - - -► | BROADCAST |

EP 4 727 078 A1

Startup_latency FOR NODE 6 = step0+step1+step2+ . . . +step5
WHERE stepN IS MEASURED BY NODE N

FIG. 10B

REDUCTION
BROADCAST

EP 4 727 078 A1

NODE 4 MUST WAIT FOR 300µs FOR NODE 0'S STEP 0 DATA. STARTUP LATENCY IS INCREASED BY 300µs

NODE 0 START 300µs LATE

NODE 4 COMPARE STEP 0 RX TIMES FROM CHILDREN TO DETECT STARTUP SKEW

NODE 6
NODE 4
NODE 5
NODE 0
NODE 1
NODE 2
NODE 3

- - - → REDUCTION

-------→ BROADCAST

FIG. 10C

EP 4 727 078 A1

EACH NODE DETECT STARTUP
SKEW BY COMPARING STEP0
TX VS. STEP0 RX

STEP 0
RX

STEP 0
TX

FIG. 10D

- - - → REDUCTION

- - - - → BROADCAST

EP 4 727 078 A1

THROUGHPUT
B/W

THROUGHPUT

EXTRA CAPACITY

UNDER-RUN

UNDER-RUN

EXTRA CAPACITY

TIME

IDLE

ACTIVE OPS
- THE IDLE DURING ACTIVE OP
INDICATE UNDER-RUN

IDLE BETWEEN OPS,
SHOWS EXTRA CAPACITY

FIG. 11

| THROUGHPUT | WORK RATIO | EXTRA CAPACITY | INTERPRETATION |
|---|---|---|---|
| 100% | 100% | N/A | RESOURCE IS RUNNING AS FAST AS POSSIBLE AND NEVER UNDERRUNING. IF IT IS THE BOTTLENECK IN THE COMPUTATION, THERE IS NOTHING THAT CAN BE DONE |
| 100% | 50% | N/A | RESOURCE IS RUNNING AS FAST AS POSSIBLE WHEN IT HAS WORK, BUT IT IS UNDER RUNNING. WHATEVER IS FEEDING THE RESOURCE MAY BE RUNNING SLOW |
| 50% | 100% | N/A | RESOURCE IS RUNNING SLOWER THAN THEORETICAL MAXIMUM. IF RESOURCE IS A NIC, IT COULD BE DUE TO UNEVEN HASHING IN THE NETWORK CAUSING CONGESTION, OR HOST-SIDE PCI B/W CONGESTION. THIS RESOURCE WILL CAUSE THE COMPUTATION TO RUN SLOW |
| N/A | N/A | 50% | RESOURCE SPENDS A LOT OF TIME NOT RUNNING ANY OPS AT ALL. IF RESOURCE IS NIC, YOU MAY WANT TO CHANGE YOUR PROGRAM TO TAKE ADVANTAGE OF THE SPARE NIC CAPACITY. YOU COULD EXPLORE SMALLER BATCHES AND/OR SPLITTING YOUR COMMUNICATION OUT INTO MORE SMALLER CHUNKS TO IMPROVE COMPUTATION |

FIG. 12

OBSERVED COMPLETION

| DATA SENT TO DST | ACK DELAY |
|---|---|

| | DATA SENT TO DST | ACK DELAY |
|---|---|---|

UNACCOUNTED IDLE

FIG. 13A

| DATA SENT TO DST | ACK DELAY |
|---|---|

| DATA SENT TO DST | ACK DELAY |
|---|---|

FIG. 13B

UNACCOUNTED IDLE

| DATA SENT TO DST | ACK DELAY |
|---|---|

| DATA SENT TO DST | ACK DELAY |
|---|---|

FIG. 13C

UNACCOUNTED IDLE

LAST CQ POLL          COMPLETION ENQUEUED          CURRENT CQ POLL (observed_completion_time)

FIG. 14          UNACCOUNTED IDLE TIME

Europäisches
Patentamt
European
Patent Office
Office européen
des brevets

**EUROPEAN SEARCH REPORT**

Application Number

EP 25 20 7112

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SOYTÜRK MUHAMMET ABDULLAH ET AL: "Monitoring Collective Communication Among GPUs", 9 June 2022 (2022-06-09), 20220609, PAGE(S) 41 - 52, XP047624029, [retrieved on 2022-06-09] * Chapters 1 - 3. * | 1-15 | INV. H04L41/0631 H04L41/069 H04L41/142 H04L43/08 ADD. H04L41/122 |
| X | JEANNOT EMMANUEL ET AL: "Improving MPI Application Communication Time with an Introspection Monitoring Library", 2020 IEEE INTERNATIONAL PARALLEL AND DISTRIBUTED PROCESSING SYMPOSIUM WORKSHOPS (IPDPSW), IEEE, 18 May 2020 (2020-05-18), pages 691-700, XP033799372, DOI: 10.1109/IPDPSW50202.2020.00124 [retrieved on 2020-07-27] * Chapters 1 - 5. * | 1-15 | |
| X | JIANBO DONG ET AL: "Boosting Large-scale Parallel Training Efficiency with C4: A Communication-Driven Approach", ARXIV.ORG, CORNELL UNIVERSITY LIBRARY, 201 OLIN LIBRARY CORNELL UNIVERSITY ITHACA, NY 14853, 7 June 2024 (2024-06-07), XP091780767, * Chapters 1 - 3. * | 1-15 | **TECHNICAL FIELDS SEARCHED (IPC)** H04L |

The present search report has been drawn up for all claims

| Place of search | Date of completion of the search | Examiner |
|---|---|---|
| Munich | 19 February 2026 | Ceccarini, Giulio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63705626